(19) **Europäisches Patentamt / European Patent Office / Office européen des brevets**

(11) **EP 4 383 584 A1**

(12) **EUROPEAN PATENT APPLICATION**
published in accordance with Art. 153(4) EPC

(43) Date of publication:
**12.06.2024 Bulletin 2024/24**

(21) Application number: **22853390.7**

(22) Date of filing: **01.08.2022**

(51) International Patent Classification (IPC):
*H04B 7/0456* (2017.01)    *H04B 7/024* (2017.01)
*H04B 7/06* (2006.01)    *H04B 17/309* (2015.01)
*H04L 5/00* (2006.01)    *H04L 25/02* (2006.01)

(52) Cooperative Patent Classification (CPC):
**H04B 7/024; H04B 7/0456; H04B 7/06;**
**H04B 17/309; H04L 5/00; H04L 25/02**

(86) International application number:
**PCT/KR2022/011286**

(87) International publication number:
**WO 2023/014012 (09.02.2023 Gazette 2023/06)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **05.08.2021 KR 20210103206**

(71) Applicant: **LG Electronics Inc.**
**Yeongdeungpo-gu**
**Seoul 07336 (KR)**

(72) Inventors:
• **KIM, Hyungtae**
 **Seoul 06772 (KR)**
• **PARK, Haewook**
 **Seoul 06772 (KR)**
• **KIM, Kyuseok**
 **Seoul 06772 (KR)**

(74) Representative: **Plasseraud IP**
 **66, rue de la Chaussée d'Antin**
 **75440 Paris Cedex 09 (FR)**

(54) **METHOD AND DEVICE FOR TRANSMITTING AND RECEIVING CHANNEL STATE INFORMATION IN WIRELESS COMMUNICATION SYSTEM**

(57) Disclosed are a method and a device for transmitting and receiving channel state information (CSI) in a wireless communication system. A method for transmitting CSI according to one embodiment of the present disclosure comprises the steps of: receiving, from a base station, first configuration information related to a CSI report and second configuration information related to a CSI resource, the second configuration information including information on one or more CSI resource sets associated with the first configuration information; receiving, from the base station, a CSI-reference signal (CSI-RS) on a plurality of CSI resources of the one or more CSI resource sets on the basis of the second configuration information; and transmitting the CSI to the base station on the basis of the CSI-RS and the first configuration information.

FIG.9

**Description**

[Technical Field]

The present disclosure relates to a wireless communication system, and in more detail, relates to a method and an apparatus of transmitting and receiving channel state information in a wireless communication system.

[Background Art]

A mobile communication system has been developed to provide a voice service while guaranteeing mobility of users. However, a mobile communication system has extended even to a data service as well as a voice service, and currently, an explosive traffic increase has caused shortage of resources and users have demanded a faster service, so a more advanced mobile communication system has been required.

The requirements of a next-generation mobile communication system at large should be able to support accommodation of explosive data traffic, a remarkable increase in a transmission rate per user, accommodation of the significantly increased number of connected devices, very low End-to-End latency and high energy efficiency. To this end, a variety of technologies such as Dual Connectivity, Massive Multiple Input Multiple Output (Massive MIMO), In-band Full Duplex, Non-Orthogonal Multiple Access (NOMA), Super wideband Support, Device Networking, etc. have been researched.

[Disclosure]

[Technical Problem]

A technical object of the present disclosure is to provide a method and an apparatus of transmitting and receiving channel state information.

An additional technical object of the present disclosure is to provide a method and an apparatus of transmitting and receiving layer indication information based on a scheme of joint transmission.

The technical objects to be achieved by the present disclosure are not limited to the above-described technical objects, and other technical objects which are not described herein will be clearly understood by those skilled in the pertinent art from the following description.

[Technical Solution]

A method for transmitting channel state information (CSI) by a UE in a wireless communication system according to an aspect of the present disclosure may comprise: receiving, from a base station, first configuration information related to CSI reporting and second configuration information related to a CSI resource, wherein the second configuration information includes information on one or more CSI resource sets associated with the first configuration information; receiving, from the base station, a CSI-reference signal (CSI-RS) on a plurality of CSI resources of the one or more CSI resource sets based on the second configuration information; and transmitting the CSI to the base station based on the CSI-RS and the first configuration information. Herein, all or part of the plurality of CSI-RS resources may be configured as a resource pair for channel measurement. In addition, based on a configuration related to a report type of layer indication information, the CSI may include at least one of layer indication information for the resource pair or layer indication information for each of one or more CSI-RS resources configured as the resource pair.

A method for receiving channel state information (CSI) by a base station in a wireless communication system according to an additional aspect of the present disclosure may comprise: transmitting, to a user equipment (UE), first configuration information related to CSI reporting and second configuration information related to a CSI resource, wherein the second configuration information includes information on one or more CSI resource sets associated with the first configuration information; transmitting, to the UE, a CSI-reference signal (CSI-RS) on a plurality of CSI resources of the one or more CSI resource sets based on the second configuration information; and receiving the CSI from the UE based on the CSI-RS and the first configuration information. Herein, all or part of the plurality of CSI-RS resources may be configured as a resource pair for channel measurement. In addition, based on a configuration related to a report type of layer indication information, the CSI may include at least one of layer indication information for the resource pair or layer indication information for each of one or more CSI-RS resources configured as the resource pair.

[Technical Effects]

According to an embodiment of the present disclosure, reporting of layer indication information is optimized for various cooperative transmission methods, thereby enabling phase adjustment based on an optimized Phase Tracking (PT)-reference signal.

Effects achievable by the present disclosure are not limited to the above-described effects, and other effects which are not described herein may be clearly understood by those skilled in the pertinent art from the following description.

[Description of Diagrams]

Accompanying drawings included as part of detailed description for understanding the present disclosure provide embodiments of the present disclosure and describe technical features of the present disclosure with detailed description.

FIG. 1 illustrates a structure of a wireless communication system to which the present disclosure may be applied.
FIG. 2 illustrates a frame structure in a wireless communication system to which the present disclosure may be applied.
FIG. 3 illustrates a resource grid in a wireless communication system to which the present disclosure may be applied.
FIG. 4 illustrates a physical resource block in a wireless communication system to which the present disclosure may be applied.
FIG. 5 illustrates a slot structure in a wireless communication system to which the present disclosure may be applied.
FIG. 6 illustrates physical channels used in a wireless communication system to which the present disclosure may be applied and a general signal transmission and reception method using them.
FIG. 7 illustrates a method of multiple TRPs transmission in a wireless communication system to which the present disclosure may be applied.
FIG. 8 illustrates an NZP-CSI-RS resource set for channel measurement in a wireless communication system to which the present disclosure may be applied.
FIG. 9 is a diagram illustrating a signaling procedure between a network and a UE for a method of transmitting and receiving channel state information according to an embodiment of the present disclosure.
FIG. 10 illustrates the operation of a UE for a method for transmitting and receiving channel state information according to an embodiment of the present disclosure.
FIG. 11 illustrates the operation of a base station for a method for transmitting and receiving channel state information according to an embodiment of the present disclosure.
FIG. 12 is a diagram which illustrates a block diagram of a wireless communication device according to an embodiment of the present disclosure.

[Best Mode]

Hereinafter, embodiments according to the present disclosure will be described in detail by referring to accompanying drawings. Detailed description to be disclosed with accompanying drawings is to describe exemplary embodiments of the present disclosure and is not to represent the only embodiment that the present disclosure may be implemented. The following detailed description includes specific details to provide complete understanding of the present disclosure. However, those skilled in the pertinent art knows that the present disclosure may be implemented without such specific details.

In some cases, known structures and devices may be omitted or may be shown in a form of a block diagram based on a core function of each structure and device in order to prevent a concept of the present disclosure from being ambiguous.

In the present disclosure, when an element is referred to as being "connected", "combined" or "linked" to another element, it may include an indirect connection relation that yet another element presents therebetween as well as a direct connection relation. In addition, in the present disclosure, a term, "include" or "have", specifies the presence of a mentioned feature, step, operation, component and/or element, but it does not exclude the presence or addition of one or more other features, stages, operations, components, elements and/or their groups.

In the present disclosure, a term such as "first", "second", etc. is used only to distinguish one element from other element and is not used to limit elements, and unless otherwise specified, it does not limit an order or importance, etc. between elements. Accordingly, within a scope of the present disclosure, a first element in an embodiment may be referred to as a second element in another embodiment and likewise, a second element in an embodiment may be referred to as a first element in another embodiment.

A term used in the present disclosure is to describe a specific embodiment, and is not to limit a claim. As used in a described and attached claim of an embodiment, a singular form is intended to include a plural form, unless the context clearly indicates otherwise. A term used in the present disclosure, "and/or", may refer to one of related enumerated items or it means that it refers to and includes any and all possible combinations of two or more of them. In addition, "/" between words in the present disclosure has the same meaning as "and/or", unless otherwise described.

The present disclosure describes a wireless communication network or a wireless communication system, and an operation performed in a wireless communication network may be performed in a process in which a device (e.g., a base station) controlling a corresponding wireless communication network controls a network and transmits or receives a signal, or may be performed in a process in which a terminal associated to a corresponding wireless network transmits or receives a signal with a network or between terminals.

In the present disclosure, transmitting or receiving a channel includes a meaning of transmitting or receiving information or a signal through a corresponding channel. For example, transmitting a control channel means that control information or a control signal is transmitted through a control channel. Similarly, transmitting a data channel means that data information or a data signal is transmitted through a data channel.

Hereinafter, a downlink (DL) means a communication from a base station to a terminal and an uplink (UL) means a communication from a terminal to a base station. In a downlink, a transmitter may be part of a base station and a receiver may be part of a terminal. In an uplink, a transmitter may be part of a terminal and a receiver may be part of a base station. A base station may be expressed as a first communication device and a terminal may be expressed as a second communication device. A base station (BS) may be substituted with a term such as a fixed station, a Node B, an eNB(evolved-NodeB), a gNB(Next Generation NodeB), a BTS(base transceiver system), an Access Point(AP), a Network(5G network), an AI(Artificial Intelligence) system/module, an RSU(road side unit), a robot, a drone(UAV: Unmanned Aerial Vehicle), an AR(Augmented Reality) device, a VR(Virtual Reality) device, etc. In addition, a terminal may be fixed or mobile, and may be substituted with a term such as a UE(User Equipment), an MS(Mobile Station), a UT(user terminal), an MSS(Mobile Subscriber Station), an SS(Subscriber Station), an AMS(Advanced Mobile Station), a WT(Wireless terminal), an MTC(Machine-Type Communication) device, an M2M(Machine-to-Machine) device, a D2D(Device-to-Device) device, a vehicle, an RSU(road side unit), a robot, an AI(Artificial Intelligence) module, a drone(UAV: Unmanned Aerial Vehicle), an AR(Augmented Reality) device, a VR(Virtual Reality) device, etc.

The following description may be used for a variety of radio access systems such as CDMA, FDMA, TDMA, OFDMA, SC-FDMA, etc. CDMA may be implemented by a wireless technology such as UTRA(Universal Terrestrial Radio Access) or CDMA2000. TDMA may be implemented by a radio technology such as GSM(Global System for Mobile communications)/GPRS(General Packet Radio Service)/EDGE(Enhanced Data Rates for GSM Evolution). OFDMA may be implemented by a radio technology such as IEEE 802.11(Wi-Fi), IEEE 802.16(WiMAX), IEEE 802-20, E-UTRA(Evolved UTRA), etc. UTRA is a part of a UMTS(Universal Mobile Telecommunications System). 3GPP(3rd Generation Partnership Project) LTE(Long Term Evolution) is a part of an E-UMTS(Evolved UMTS) using E-UTRA and LTE-A(Advanced)/LTE-A pro is an advanced version of 3GPP LTE. 3GPP NR(New Radio or New Radio Access Technology) is an advanced version of 3GPP LTE/LTE-A/LTE-A pro.

To clarify description, it is described based on a 3GPP communication system (e.g., LTE-A, NR), but a technical idea of the present disclosure is not limited thereto. LTE means a technology after 3GPP TS(Technical Specification) 36.xxx Release 8. In detail, an LTE technology in or after 3GPP TS 36.xxx Release 10 is referred to as LTE-A and an LTE technology in or after 3GPP TS 36.xxx Release 13 is referred to as LTE-A pro. 3GPP NR means a technology in or after TS 38.xxx Release 15. LTE/NR may be referred to as a 3GPP system. "xxx" means a detailed number for a standard document. LTE/NR may be commonly referred to as a 3GPP system. For a background art, a term, an abbreviation, etc. used to describe the present disclosure, matters described in a standard document disclosed before the present disclosure may be referred to. For example, the following document may be referred to.

For 3GPP LTE, TS 36.211(physical channels and modulation), TS 36.212(multiplexing and channel coding), TS 36.213(physical layer procedures), TS 36.300(overall description), TS 36.331(radio resource control) may be referred to.

For 3GPP NR, TS 38.211(physical channels and modulation), TS 38.212(multiplexing and channel coding), TS 38.213(physical layer procedures for control), TS 38.214(physical layer procedures for data), TS 38.300(NR and NG-RAN(New Generation-Radio Access Network) overall description), TS 38.331(radio resource control protocol specification) may be referred to.

Abbreviations of terms which may be used in the present disclosure is defined as follows.

BM: beam management
CQI: Channel Quality Indicator
CRI: channel state information - reference signal resource indicator
CSI: channel state information
CSI-IM: channel state information - interference measurement
CSI-RS: channel state information - reference signal
DMRS: demodulation reference signal
FDM: frequency division multiplexing
FFT: fast Fourier transform

IFDMA: interleaved frequency division multiple access

IFFT: inverse fast Fourier transform

L1-RSRP: Layer 1 reference signal received power

L1-RSRQ: Layer 1 reference signal received quality

MAC: medium access control

NZP: non-zero power

OFDM: orthogonal frequency division multiplexing

PDCCH: physical downlink control channel

PDSCH: physical downlink shared channel

PMI: precoding matrix indicator

RE: resource element

RI: Rank indicator

RRC: radio resource control

RSSI: received signal strength indicator

Rx: Reception

QCL: quasi co-location

SINR: signal to interference and noise ratio

SSB (or SS/PBCH block): Synchronization signal block (including PSS (primary synchronization signal), SSS (secondary synchronization signal) and PBCH (physical broadcast channel))

TDM: time division multiplexing

TRP: transmission and reception point

TRS: tracking reference signal

Tx: transmission

UE: user equipment

ZP: zero power

Overall System

As more communication devices have required a higher capacity, a need for an improved mobile broadband communication compared to the existing radio access technology (RAT) has emerged. In addition, massive MTC (Machine Type Communications) providing a variety of services anytime and anywhere by connecting a plurality of devices and things is also one of main issues which will be considered in a next-generation communication. Furthermore, a communication system design considering a service/a terminal sensitive to reliability and latency is also discussed. As such, introduction of a next-generation RAT considering eMBB(enhanced mobile broadband communication), mMTC(massive MTC), URLLC(Ultra-Reliable and Low Latency Communication), etc. is discussed and, for convenience, a corresponding technology is referred to as NR in the present disclosure. NR is an expression which represents an example of a 5G RAT.

A new RAT system including NR uses an OFDM transmission method or a transmission method similar to it. A new RAT system may follow OFDM parameters different from OFDM parameters of LTE. Alternatively, a new RAT system follows a numerology of the existing LTE/LTE-A as it is, but may support a wider system bandwidth (e.g., 100MHz). Alternatively, one cell may support a plurality of numerologies. In other words, terminals which operate in accordance with different numerologies may coexist in one cell.

A numerology corresponds to one subcarrier spacing in a frequency domain. As a reference subcarrier spacing is scaled by an integer N, a different numerology may be defined.

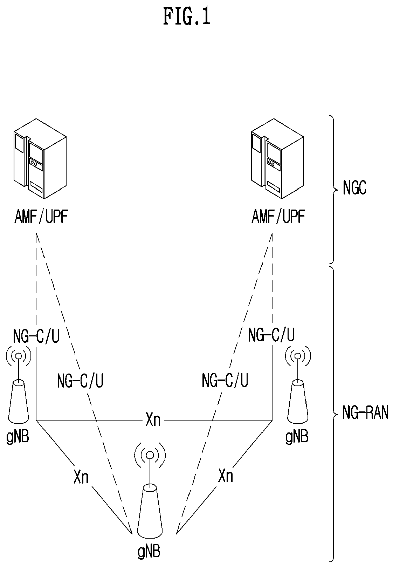

FIG. 1 illustrates a structure of a wireless communication system to which the present disclosure may be applied.

In reference to FIG. 1, NG-RAN is configured with gNBs which provide a control plane (RRC) protocol end for a NG-RA(NG-Radio Access) user plane (i.e., a new AS(access stratum) sublayer/PDCP(Packet Data Convergence Protocol)/RLC(Radio Link Control)/MAC/PHY) and UE. The gNBs are interconnected through a Xn interface. The gNB, in addition, is connected to an NGC(New Generation Core) through an NG interface. In more detail, the gNB is connected to an AMF(Access and Mobility Management Function) through an N2 interface, and is connected to a UPF(User Plane Function) through an N3 interface.

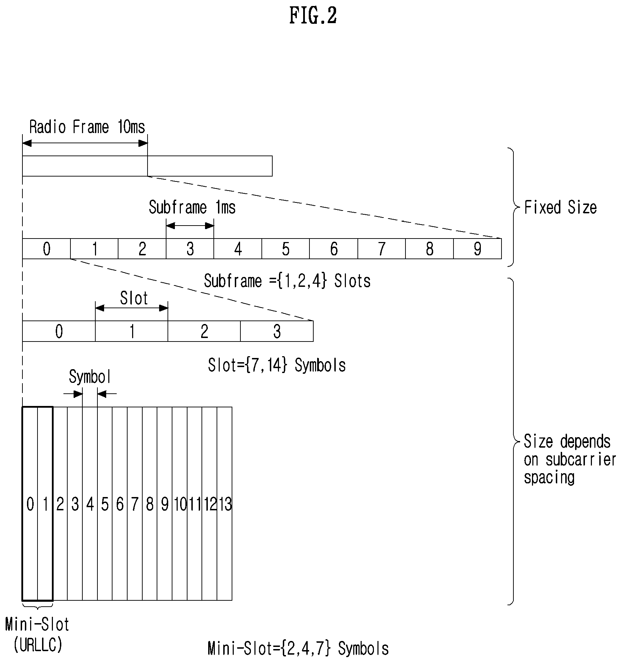

FIG. 2 illustrates a frame structure in a wireless communication system to which the present disclosure may be applied.

A NR system may support a plurality of numerologies. Here, a numerology may be defined by a subcarrier spacing and a cyclic prefix (CP) overhead. Here, a plurality of subcarrier spacings may be derived by scaling a basic (reference) subcarrier spacing by an integer N (or, $\mu$). In addition, although it is assumed that a very low subcarrier spacing is not used in a very high carrier frequency, a used numerology may be selected independently from a frequency band. In addition, a variety of frame structures according to a plurality of numerologies may be supported in a NR system.

Hereinafter, an OFDM numerology and frame structure which may be considered in a NR system will be described. A plurality of OFDM numerologies supported in a NR system may be defined as in the following Table 1.

[Table 1]

| $\mu$ | $\Delta f=2^{\mu}\cdot 15$ [kHz] | CP |
|---|---|---|
| 0 | 15 | Normal |
| 1 | 30 | Normal |
| 2 | 60 | Normal, Extended |
| 3 | 120 | Normal |
| 4 | 240 | Normal |

NR supports a plurality of numerologies (or subcarrier spacings (SCS)) for supporting a variety of 5G services. For example, when a SCS is 15kHz, a wide area in traditional cellular bands is supported, and when a SCS is 30kHz/60kHz, dense-urban, lower latency and a wider carrier bandwidth are supported, and when a SCS is 60kHz or higher, a bandwidth wider than 24.25GHz is supported to overcome a phase noise.

An NR frequency band is defined as a frequency range in two types (FR1, FR2). FR1, FR2 may be configured as in the following Table 2. In addition, FR2 may mean a millimeter wave (mmW).

[Table 2]

| Frequency Range designation | Corresponding frequency range | Subcarrier Spacing |
|---|---|---|
| FR1 | 410MHz - 7125MHz | 15, 30, 60kHz |
| FR2 | 24250MHz - | 60, 120, |
| | 52600MHz | 240kHz |

Regarding a frame structure in an NR system, a size of a variety of fields in a time domain is expresses as a multiple of a time unit of $T_c=1/(\Delta f_{max}\cdot N_f)$. Here, $\Delta f_{max}$ is $480\cdot 10^3$ Hz and $N_f$ is 4096. Downlink and uplink transmission is configured (organized) with a radio frame having a duration of $T_f=1/(\Delta f_{max}N_f/100)\cdot T_c=10ms$. Here, a radio frame is configured with 10 subframes having a duration of $T_{sf}=(\Delta f_{max}N_f/1000)\cdot T_c=1ms$, respectively. In this case, there may be one set of frames for an uplink and one set of frames for a downlink. In addition, transmission in an uplink frame No. i from a terminal should start earlier by $T_{TA}=(N_{TA}+N_{TA,offset})T_c$ than a corresponding downlink frame in a corresponding terminal starts. For a subcarrier spacing configuration $\mu$, slots are numbered in an increasing order of $n_s^{\mu}\in 10, ..., N_{slot}^{subframe,\mu}-1\}$ in a subframe and are numbered in an increasing order of $n_{s,f}^{\mu}\in\{0,..., N_{slot}^{frame,\mu}-1\}$ in a radio frame. One slot is configured with $N_{symb}^{slot}$ consecutive OFDM symbols and $N_{symb}^{slot}$ is determined according to CP. A start of a slot $n_s^{\mu}$ in a subframe is temporally arranged with a start of an OFDM symbol $n_s^{\mu}N_{symb}^{slot}$ in the same subframe. All terminals may not perform transmission and reception at the same time, which means that all OFDM symbols of a downlink slot or an uplink slot may not be used.

Table 3 represents the number of OFDM symbols per slot ($N_{symb}^{slot}$), the number of slots per radio frame ($N_{slot}^{frame,\mu}$) and the number of slots per subframe ($N_{slot}^{subframe,\mu}$) in a normal CP and Table 4 represents the number of OFDM symbols per slot, the number of slots per radio frame and the number of slots per subframe in an extended CP.

[Table 3]

| $\mu$ | $N_{symb}^{slot}$ | $N_{slot}^{frame,\mu}$ | $N_{slot}^{subframe,\mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

[Table 4]

| $\mu$ | $N_{symb}^{slot}$ | $N_{slot}^{frame,\mu}$ | $N_{slot}^{subframe,\mu}$ |
|---|---|---|---|
| 2 | 12 | 40 | 4 |

FIG. 2 is an example on $\mu$=2 (SCS is 60kHz), 1 subframe may include 4 slots referring to Table 3. 1 subframe={1,2,4} slot shown in FIG. 2 is an example, the number of slots which may be included in 1 subframe is defined as in Table 3 or Table 4. In addition, a mini-slot may include 2, 4 or 7 symbols or more or less symbols.

Regarding a physical resource in a NR system, an antenna port, a resource grid, a resource element, a resource block, a carrier part, etc. may be considered. Hereinafter, the physical resources which may be considered in an NR system will be described in detail.

First, in relation to an antenna port, an antenna port is defined so that a channel where a symbol in an antenna port is carried can be inferred from a channel where other symbol in the same antenna port is carried. When a large-scale property of a channel where a symbol in one antenna port is carried may be inferred from a channel where a symbol in other antenna port is carried, it may be said that 2 antenna ports are in a QC/QCL(quasi co-located or quasi co-location) relationship. In this case, the large-scale property includes at least one of delay spread, doppler spread, frequency shift, average received power, received timing.

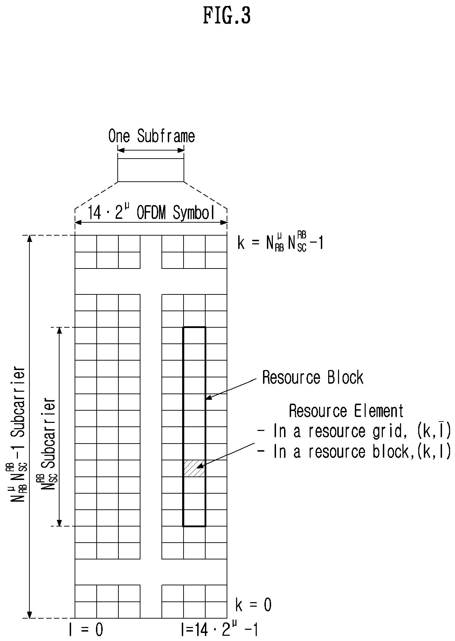

FIG. 3 illustrates a resource grid in a wireless communication system to which the present disclosure may be applied.

In reference to FIG. 3, it is illustratively described that a resource grid is configured with $N_{RB}^{\mu}N_{sc}^{RB}$ subcarriers in a frequency domain and one subframe is configured with $14 \cdot 2^{\mu}$ OFDM symbols, but it is not limited thereto. In an NR system, a transmitted signal is described by OFDM symbols of $2^{\mu}N_{symb}^{(\mu)}$ and one or more resource grids configured with $N_{RB}^{\mu}N_{sc}^{RB}$ subcarriers. Here, $N_{RB}^{\mu} \leq N_{RB}^{max,\mu}$. The $N_{RB}^{max,\mu}$ represents a maximum transmission bandwidth, which may be different between an uplink and a downlink as well as between numerologies. In this case, one resource grid may be configured per $\mu$ and antenna port p. Each element of a resource grid for $\mu$ and an antenna port p is referred to as a resource element and is uniquely identified by an index pair (k,l'). Here, $k=0,...,N_{RB}^{\mu}N_{sc}^{RB}-1$ is an index in a frequency domain and $l'=0, ...,2^{\mu}N_{symb}^{(\mu)}-1$ refers to a position of a symbol in a subframe. When referring to a resource element in a slot, an index pair (k,l) is used. Here, $l=0,...,N_{symb}^{\mu}-1$. A resource element (k,l') for $\mu$ and an antenna port p corresponds to a complex value, $a_{k,l'}^{(p,\mu)}$. When there is no risk of confusion or when a specific antenna port or numerology is not specified, indexes p and $\mu$ may be dropped, whereupon a complex value may be $a_{k,l'}^{(p)}$ or $a_{k,l'}$. In addition, a resource block (RB) is defined as $N_{sc}^{RB}=12$ consecutive subcarriers in a frequency domain.

Point A plays a role as a common reference point of a resource block grid and is obtained as follows.

offsetToPointA for a primary cell (PCell) downlink represents a frequency offset between point A and the lowest subcarrier of the lowest resource block overlapped with a SS/PBCH block which is used by a terminal for an initial cell selection. It is expressed in resource block units assuming a 15kHz subcarrier spacing for FR1 and a 60kHz subcarrier spacing for FR2.

absoluteFrequencyPointA represents a frequency-position of point A expressed as in ARFCN (absolute radiofrequency channel number).

Common resource blocks are numbered from 0 to the top in a frequency domain for a subcarrier spacing configuration $\mu$. The center of subcarrier 0 of common resource block 0 for a subcarrier spacing configuration $\mu$ is identical to 'point A'. A relationship between a common resource block number $n_{CRB}^{\mu}$ and a resource element (k,l) for a subcarrier spacing configuration $\mu$ in a frequency domain is given as in the following Equation 1.

【Equation 1】

$$n_{CRB}^{\mu} = \left\lfloor \frac{k}{N_{sc}^{RB}} \right\rfloor$$

In Equation 1, k is defined relatively to point A so that k=0 corresponds to a subcarrier centering in point A. Physical resource blocks are numbered from 0 to $N_{BWP,i}^{size,\mu}-1$ in a bandwidth part (BWP) and i is a number of a BWP. A relationship between a physical resource block $n_{PRB}$ and a common resource block $n_{CRB}$ in BWP i is given by the following Equation 2.

【Equation 2】

$$n_{CRB}^{\mu} = n_{PRB}^{\mu} + N_{BWP,i}^{start,\mu}$$

$N_{BWP,i}^{start,\mu}$ is a common resource block that a BWP starts relatively to common resource block 0.

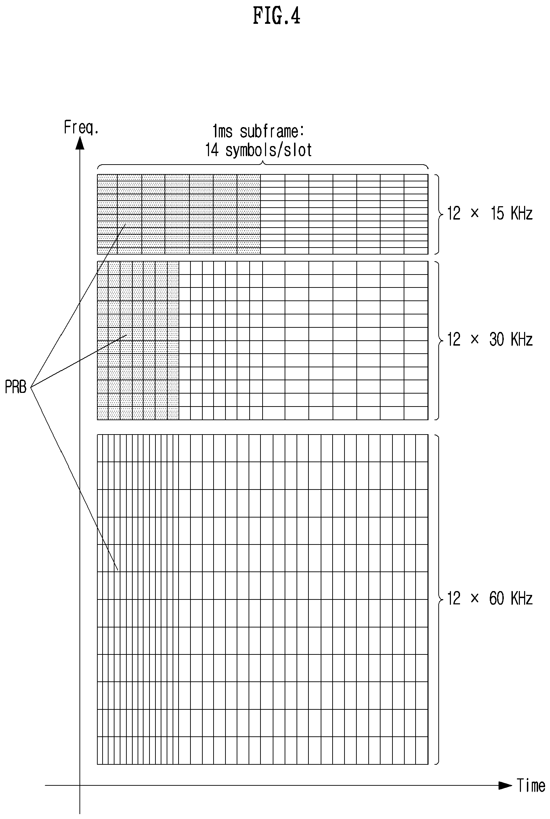

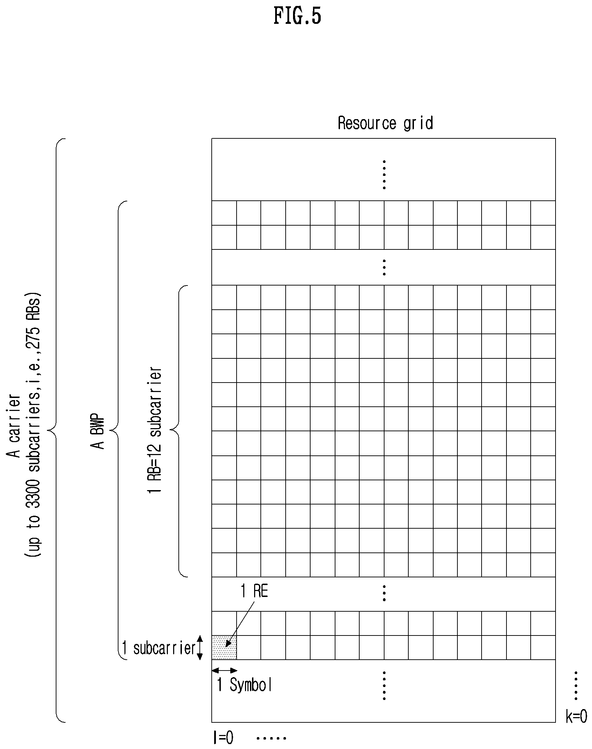

FIG. 4 illustrates a physical resource block in a wireless communication system to which the present disclosure may be applied. And, FIG. 5 illustrates a slot structure in a wireless communication system to which the present disclosure may be applied.

In reference to FIG. 4 and FIG. 5, a slot includes a plurality of symbols in a time domain. For example, for a normal CP, one slot includes 7 symbols, but for an extended CP, one slot includes 6 symbols.

A carrier includes a plurality of subcarriers in a frequency domain. An RB (Resource Block) is defined as a plurality of (e.g., 12) consecutive subcarriers in a frequency domain. A BWP(Bandwidth Part) is defined as a plurality of consecutive (physical) resource blocks in a frequency domain and may correspond to one numerology (e.g., an SCS, a CP length, etc.). A carrier may include a maximum N (e.g., 5) BWPs. A data communication may be performed through an activated BWP and only one BWP may be activated for one terminal. In a resource grid, each element is referred to as a resource element (RE) and one complex symbol may be mapped.

In an NR system, up to 400 MHz may be supported per component carrier (CC). If a terminal operating in such a wideband CC always operates turning on a radio frequency (FR) chip for the whole CC, terminal battery consumption may increase. Alternatively, when several application cases operating in one wideband CC (e.g., eMBB, URLLC, Mmtc, V2X, etc.) are considered, a different numerology (e.g., a subcarrier spacing, etc.) may be supported per frequency band in a corresponding CC. Alternatively, each terminal may have a different capability for the maximum bandwidth. By considering it, a base station may indicate a terminal to operate only in a partial bandwidth, not in a full bandwidth of a wideband CC, and a corresponding partial bandwidth is defined as a bandwidth part (BWP) for convenience. A BWP may be configured with consecutive RBs on a frequency axis and may correspond to one numerology (e.g., a subcarrier spacing, a CP length, a slot/a mini-slot duration).

Meanwhile, a base station may configure a plurality of BWPs even in one CC configured to a terminal. For example, a BWP occupying a relatively small frequency domain may be configured in a PDCCH monitoring slot, and a PDSCH indicated by a PDCCH may be scheduled in a greater BWP. Alternatively, when UEs are congested in a specific BWP, some terminals may be configured with other BWP for load balancing. Alternatively, considering frequency domain inter-cell interference cancellation between neighboring cells, etc., some middle spectrums of a full bandwidth may be excluded and BWPs on both edges may be configured in the same slot. In other words, a base station may configure at least one DL/UL BWP to a terminal associated with a wideband CC. A base station may activate at least one DL/UL BWP of configured DL/UL BWP(s) at a specific time (by L1 signaling or MAC CE(Control Element) or RRC signaling, etc.). In addition, a base station may indicate switching to other configured DL/UL BWP (by L1 signaling or MAC CE or RRC signaling, etc.). Alternatively, based on a timer, when a timer value is expired, it may be switched to a determined DL/UL BWP. Here, an activated DL/UL BWP is defined as an active DL/UL BWP. But, a configuration on a DL/UL BWP may not be received when a terminal performs an initial access procedure or before a RRC connection is set up, so a DL/UL BWP which is assumed by a terminal under these situations is defined as an initial active DL/UL BWP.

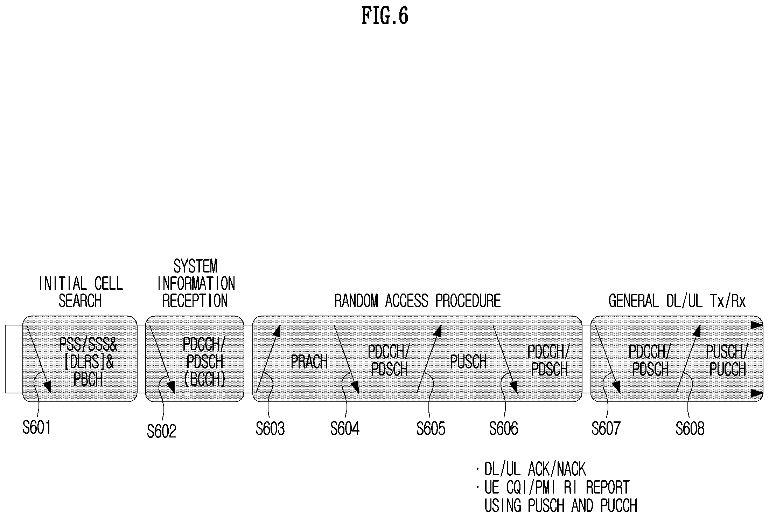

FIG. 6 illustrates physical channels used in a wireless communication system to which the present disclosure may be applied and a general signal transmission and reception method using them.

In a wireless communication system, a terminal receives information through a downlink from a base station and transmits information through an uplink to a base station. Information transmitted and received by a base station and a terminal includes data and a variety of control information and a variety of physical channels exist according to a type/a usage of information transmitted and received by them.

When a terminal is turned on or newly enters a cell, it performs an initial cell search including synchronization with a base station or the like (S601). For the initial cell search, a terminal may synchronize with a base station by receiving a primary synchronization signal (PSS) and a secondary synchronization signal (SSS) from a base station and obtain information such as a cell identifier (ID), etc. After that, a terminal may obtain broadcasting information in a cell by receiving a physical broadcast channel (PBCH) from a base station. Meanwhile, a terminal may check out a downlink channel state by receiving a downlink reference signal (DL RS) at an initial cell search stage.

A terminal which completed an initial cell search may obtain more detailed system information by receiving a physical downlink control channel (PDCCH) and a physical downlink shared channel (PDSCH) according to information carried in the PDCCH (S602).

Meanwhile, when a terminal accesses to a base station for the first time or does not have a radio resource for signal transmission, it may perform a random access (RACH) procedure to a base station (S603 to S606). For the random access procedure, a terminal may transmit a specific sequence as a preamble through a physical random access channel (PRACH) (S603 and S605) and may receive a response message for a preamble through a PDCCH and a corresponding PDSCH (S604 and S606). A contention based RACH may additionally perform a contention resolution procedure.

A terminal which performed the above-described procedure subsequently may perform PDCCH/PDSCH reception (S607) and PUSCH(Physical Uplink Shared Channel)/PUCCH(physical uplink control channel) transmission (S608) as a general uplink/downlink signal transmission procedure. In particular, a terminal receives downlink control information (DCI) through a PDCCH. Here, DCI includes control information such as resource allocation information for a terminal and a format varies depending on its purpose of use.

Meanwhile, control information which is transmitted by a terminal to a base station through an uplink or is received by a terminal from a base station includes a downlink/uplink ACK/NACK(Acknowledgement/Non-Acknowledgement) signal, a CQI(Channel Quality Indicator), a PMI(Precoding Matrix Indicator), a RI(Rank Indicator), etc. For a 3GPP LTE system, a terminal may transmit control information of the above-described CQI/PMI/RI, etc. through a PUSCH and/or a PUCCH.

Table 5 represents an example of a DCI format in an NR system.

[Table 5]

| DCI Format | Use |
|---|---|
| 0_0 | Scheduling of a PUSCH in one cell |
| 0_1 | Scheduling of one or multiple PUSCHs in one cell, or indication of cell group downlink feedback information to a UE |
| 0_2 | Scheduling of a PUSCH in one cell |
| 1_0 | Scheduling of a PDSCH in one DL cell |
| 1_1 | Scheduling of a PDSCH in one cell |
| 1_2 | Scheduling of a PDSCH in one cell |

In reference to Table 5, DCI formats 0_0, 0_1 and 0_2 may include resource information (e.g., UL/SUL(Supplementary UL), frequency resource allocation, time resource allocation, frequency hopping, etc.), information related to a transport block(TB) (e.g., MCS(Modulation Coding and Scheme), a NDI(New Data Indicator), a RV(Redundancy Version), etc.), information related to a HARQ(Hybrid - Automatic Repeat and request) (e.g., a process number, a DAI(Downlink Assignment Index), PDSCH-HARQ feedback timing, etc.), information related to multiple antennas (e.g., DMRS sequence initialization information, an antenna port, a CSI request, etc.), power control information (e.g., PUSCH power control, etc.) related to scheduling of a PUSCH and control information included in each DCI format may be pre-defined.

DCI format 0_0 is used for scheduling of a PUSCH in one cell. Information included in DCI format 0_0 is CRC (cyclic redundancy check) scrambled by a C-RNTI(Cell Radio Network Temporary Identifier) or a CS-RNTI(Configured Scheduling RNTI) or a MCS-C-RNTI(Modulation Coding Scheme Cell RNTI) and transmitted.

DCI format 0_1 is used to indicate scheduling of one or more PUSCHs or configure grant (CG) downlink feedback information to a terminal in one cell. Information included in DCI format 0_1 is CRC scrambled by a C-RNTI or a CS-RNTI or a SP-CSI-RNTI(Semi-Persistent CSI RNTI) or a MCS-C-RNTI and transmitted.

DCI format 0_2 is used for scheduling of a PUSCH in one cell. Information included in DCI format 0_2 is CRC scrambled by a C-RNTI or a CS-RNTI or a SP-CSI-RNTI or a MCS-C-RNTI and transmitted.

Next, DCI formats 1_0, 1_1 and 1_2 may include resource information (e.g., frequency resource allocation, time resource allocation, VRB(virtual resource block)-PRB(physical resource block) mapping, etc.), information related to a transport block(TB)(e.g., MCS, NDI, RV, etc.), information related to a HARQ (e.g., a process number, DAI, PDSCH-HARQ feedback timing, etc.), information related to multiple antennas (e.g., an antenna port, a TCI(transmission configuration indicator), a SRS(sounding reference signal) request, etc.), information related to a PUCCH (e.g., PUCCH power control, a PUCCH resource indicator, etc.) related to scheduling of a PDSCH and control information included in each DCI format may be pre-defined.

DCI format 1_0 is used for scheduling of a PDSCH in one DL cell. Information included in DCI format 1_0 is CRC scrambled by a C-RNTI or a CS-RNTI or a MCS-C-RNTI and transmitted.

DCI format 1_1 is used for scheduling of a PDSCH in one cell. Information included in DCI format 1_1 is CRC scrambled by a C-RNTI or a CS-RNTI or a MCS-C-RNTI and transmitted.

DCI format 1_2 is used for scheduling of a PDSCH in one cell. Information included in DCI format 1_2 is CRC scrambled by a C-RNTI or a CS-RNTI or a MCS-C-RNTI and transmitted.

CSI-related Operation

In an NR (New Radio) system, a CSI-RS(channel state information-reference signal) is used for time and/or frequency tracking, CSI computation, L1(layer 1)-RSRP(reference signal received power) computation and mobility. Here, CSI computation is related to CSI acquisition and L1-RSRP computation is related to beam management (BM).

CSI(channel state information) collectively refers to information which may represent quality of a radio channel (or also referred to as a link) formed between a terminal and an antenna port.

- To perform one of the usages of a CSI-RS, a terminal (e.g., user equipment, UE) receives configuration information related to CSI from a base station (e.g., general Node B, gNB) through RRC(radio resource control) signaling.

The configuration information related to CSI may include at least one of information related to a CSI-IM (interference management) resource, information related to CSI measurement configuration, information related to CSI resource configuration, information related to a CSI-RS resource or information related to CSI report configuration.

   i) Information related to a CSI-IM resource may include CSI-IM resource information, CSI-IM resource set information, etc. A CSI-IM resource set is identified by a CSI-IM resource set ID (identifier) and one resource set includes at least one CSI-IM resource. Each CSI-IM resource is identified by a CSI-IM resource ID.

   ii) Information related to CSI resource configuration may be expressed as CSI-ResourceConfig IE. Information related to a CSI resource configuration defines a group which includes at least one of an NZP(non zero power) CSI-RS resource set, a CSI-IM resource set or a CSI-SSB resource set. In other words, the information related to a CSI resource configuration may include a CSI-RS resource set list and the CSI-RS resource set list may include at least one of a NZP CSI-RS resource set list, a CSI-IM resource set list or a CSI-SSB resource set list. A CSI-RS resource set is identified by a CSI-RS resource set ID and one resource set includes at least one CSI-RS resource. Each CSI-RS resource is identified by a CSI-RS resource ID.

   Parameters representing a usage of a CSI-RS (e.g., a 'repetition' parameter related to BM, a 'trs-Info' parameter related to tracking) may be configured per NZP CSI-RS resource set.

   iii) Information related to a CSI report configuration includes a report configuration type (reportConfigType) parameter representing a time domain behavior and a report quantity (reportQuantity) parameter representing CSI-related quantity for a report. The time domain behavior may be periodic, aperiodic or semi-persistent.

- A terminal measures CSI based on the configuration information related to CSI.
  The CSI measurement may include (1) a process in which a terminal receives a CSI-RS and (2) a process in which CSI is computed through a received CSI-RS and detailed description thereon is described after.
  For a CSI-RS, RE(resource element) mapping of a CSI-RS resource in a time and frequency domain is configured by higher layer parameter CSI-RS-ResourceMapping.
- A terminal reports the measured CSI to a base station.

In this case, when quantity of CSI-ReportConfig is configured as 'none (or No report)', the terminal may omit the report. But, although the quantity is configured as 'none (or No report)', the terminal may perform a report to a base station. When the quantity is configured as 'none', an aperiodic TRS is triggered or repetition is configured. In this case, only when repetition is configured as 'ON', a report of the terminal may be omitted.

CSI Measurement

An NR system supports more flexible and dynamic CSI measurement and reporting. Here, the CSI measurement may include a procedure of receiving a CSI-RS and acquiring CSI by computing a received CSI-RS.

As a time domain behavior of CSI measurement and reporting, aperiodic/semi-persistent/periodic CM (channel measurement) and IM (interference measurement) are supported. 4-port NZP CSI-RS RE pattern is used for CSI-IM configuration.

CSI-IM based IMR of NR has a design similar to CSI-IM of LTE and is configured independently from ZP CSI-RS resources for PDSCH rate matching. In addition, each port emulates an interference layer having (a desirable channel and) a precoded NZP CSI-RS in NZP CSI-RS-based IMR. As it is about intra-cell interference measurement for a multi-user case, MU interference is mainly targeted.

A base station transmits a precoded NZP CSI-RS to a terminal in each port of configured NZP CSI-RS based IMR.

A terminal assumes a channel/interference layer and measures interference for each port in a resource set.

When there is no PMI and RI feedback for a channel, a plurality of resources are configured in a set and a base station or a network indicates a subset of NZP CSI-RS resources through DCI for channel/interference measurement.

A resource setting and a resource setting configuration are described in more detail.

Resource Setting

Each CSI resource setting 'CSI-ResourceConfig' includes a configuration for a S≥1 CSI resource set (given by a higher layer parameter csi-RS-ResourceSetList). A CSI resource setting corresponds to CSI-RS- resourcesetlist. Here, S represents the number of configured CSI-RS resource sets. Here, a configuration for a S≥1 CSI resource set includes each CSI resource set including CSI-RS resources (configured with a NZP CSI-RS or CSI-IM) and a SS/PBCH block (SSB) resource used for L1-RSRP computation.

Each CSI resource setting is positioned at a DL BWP(bandwidth part) identified by a higher layer parameter bwp-id. In addition, all CSI resource settings linked to a CSI reporting setting have the same DL BWP.

A time domain behavior of a CSI-RS resource in a CSI resource setting included in a CSI-ResourceConfig IE may be indicated by a higher layer parameter resourceType and may be configured to be aperiodic, periodic or semi-persistent. For a periodic and semi-persistent CSI resource setting, the number (S) of configured CSI-RS resource sets is limited to '1'. For a periodic and semi-persistent CSI resource setting, configured periodicity and a slot offset are given by a numerology of an associated DL BWP as given by bwp-id.

When UE is configured with a plurality of CSI-ResourceConfigs including the same NZP CSI-RS resource ID, the same time domain behavior is configured for CSI-ResourceConfig.

When UE is configured with a plurality of CSI-ResourceConfigs including the same CSI-IM resource ID, the same time domain behavior is configured for CSI-ResourceConfig.

One or more CSI resource settings for channel measurement (CM) and interference measurement (IM) are configured through higher layer signaling as follows.

- CSI-IM resource for interference measurement
- NZP CSI-RS resource for interference measurement
- NZP CSI-RS resource for channel measurement

In other words, a CMR (channel measurement resource) may be a NZP CSI-RS for CSI acquisition and an IMR(Interference measurement resource) may be a NZP CSI-RS for CSI-IM and IM.

In this case, CSI-IM(or a ZP CSI-RS for IM) is mainly used for inter-cell interference measurement.

In addition, an NZP CSI-RS for IM is mainly used for intra-cell interference measurement from multi-users.

UE may assume that CSI-RS resource(s) for channel measurement and CSI-IM / NZP CSI-RS resource(s) for interference measurement configured for one CSI reporting are 'QCL-TypeD' per resource.

Resource Setting Configuration

As described, a resource setting may mean a resource set list.

For aperiodic CSI, each trigger state configured by using a higher layer parameter CSI-AperiodicTriggerState is associated with one or a plurality of CSI-ReportConfigs that each CSI-ReportConfig is linked to a periodic, semi-persistent or aperiodic resource setting.

One reporting setting may be connected to up to 3 resource settings.

- When one resource setting is configured, a resource setting (given by a higher layer parameter resourcesForChannelMeasurement) is about channel measurement for L1-RSRP computation.
- When two resource settings are configured, a first resource setting (given by a higher layer parameter resourcesForChannelMeasurement) is for channel measurement and a second resource setting (given by csi-IM-ResourcesForInterference or nzp-CSI-RS - ResourcesForInterference) is for interference measurement performed in CSI-IM or a NZP CSI-RS.
- When three resource settings are configured, a first resource setting (given by resourcesForChannelMeasurement) is for channel measurement, a second resource setting (given by csi-IM-ResourcesForInterference) is for CSI-IM based interference measurement and a third resource setting (given by nzp-CSI-RS-ResourcesForInterference) is for NZP CSI-RS based interference measurement.

For semi-persistent or periodic CSI, each CSI-ReportConfig is linked to a periodic or semi-persistent resource setting.

- When one resource setting (given by resourcesForChannelMeasurement) is configured, the resource setting is about channel measurement for L1-RSRP computation.

- When two resource settings are configured, a first resource setting (given by resourcesForChannelMeasurement) is for channel measurement and a second resourece setting (given by a higher layer parameter csi-IM-Resources-ForInterference) is used for interference measurement performed in CSI-IM.

CSI Computation

When interference measurement is performed in CSI-IM, each CSI-RS resource for channel measurement is associated with a CSI-IM resource per resource in an order of CSI-RS resources and CSI-IM resources in a corresponding resource set. The number of CSI-RS resources for channel measurement is the same as the number of CSI-IM resources.

In addition, when interference measurement is performed in an NZP CSI-RS, UE does not expect to be configured with one or more NZP CSI-RS resources in an associated resource set in a resource setting for channel measurement.

A terminal configured with a higher layer parameter nzp-CSI-RS-ResourcesForInterference does not expect that 18 or more NZP CSI-RS ports will be configured in a NZP CSI-RS resource set.

For CSI measurement, a terminal assumes the followings.

- Each NZP CSI-RS port configured for interference measurement corresponds to an interference transmission layer.
- All interference transmission layers of an NZP CSI-RS port for interference measurement consider EPRE (energy per resource element) ratio.
- A different interference signal in RE(s) of an NZP CSI-RS resource for channel measurement, an NZP CSI-RS resource for interference measurement or a CSI-IM resource for interference measurement

CSI Report

For a CSI report, a time and frequency resource which may be used by UE are controlled by a base station.

CSI(channel state information) may include at least one of a channel quality indicator(CQI), a precoding matrix indicator(PMI), a CSI-RS resource indicator (CRI), a SS/PBCH block resource indicator (SSBRI), a layer indicator (LI), a rank indicator (RI) or L1-RSRP.

For CQI, PMI, CRI, SSBRI, LI, RI, L1-RSRP, a terminal is configured by a higher layer with $N \geq 1$ CSI-ReportConfig reporting setting, $M \geq 1$ CSI-ResourceConfig resource setting and a list of one or two trigger states (provided by aperiodicTriggerStateList and semiPersistentOnPUSCH-TriggerStateList). Each trigger state in the aperiodicTriggerStateList includes a associated CSI-ReportConfigs list which indicates a channel and optional resource set IDs for interference. In semiPersistentOnPUSCH-TriggerStateList, one associated CSI-ReportConfig is included in each trigger state.

In addition, a time domain behavior of CSI reporting supports periodic, semi-persistent, aperiodic.

i) Periodic CSI reporting is performed in a short PUCCH, a long PUCCH. Periodicity and a slot offset of periodic CSI reporting may be configured by RRC and refers to a CSI-ReportConfig IE.

ii) SP(semi-periodic) CSI reporting is performed in a short PUCCH, a long PUCCH, or a PUSCH.

For SP CSI in a short/long PUCCH, periodicity and a slot offset are configured by RRC and a CSI report is activated/deactivated by separate MAC CE / DCI.

For SP CSI in a PUSCH, periodicity of SP CSI reporting is configured by RRC, but a slot offset is not configured by RRC and SP CSI reporting is activated/deactivated by DCI(format 0_1). For SP CSI reporting in a PUSCH, a separated RNTI(SP-CSI C-RNTI) is used.

An initial CSI report timing follows a PUSCH time domain allocation value indicated by DCI and a subsequent CSI report timing follows a periodicity configured by RRC.

DCI format 0_1 may include a CSI request field and activate/deactivate a specific configured SP-CSI trigger state. SP CSI reporting has activation/deactivation equal or similar to a mechanism having data transmission in a SPS PUSCH.

iii) Aperiodic CSI reporting is performed in a PUSCH and is triggered by DCI. In this case, information related to trigger of aperiodic CSI reporting may be delivered/indicated/configured through MAC-CE.

For AP CSI having an AP CSI-RS, AP CSI-RS timing is configured by RRC and timing for AP CSI reporting is dynamically controlled by DCI.

In NR, a method of dividing and reporting CSI in a plurality of reporting instances applied to a PUCCH based CSI report in LTE (e.g., transmitted in an order of RI, WB PMI/CQI, SB PMI/CQI) is not applied. Instead, in NR, there is a limit that a specific CSI report is not configured in a short/long PUCCH and a CSI omission rule is defined. In addition, regarding AP CSI reporting timing, a PUSCH symbol/slot location is dynamically indicated by DCI. In addition, candidate slot offsets are configured by RRC. For CSI reporting, a slot offset(Y) is configured per reporting setting. For UL-SCH, a slot offset K2 is separately configured.

2 CSI latency classes (low latency class, high latency class) are defined with regard to CSI computation complexity. Low latency CSI is WB CSI which includes up to 4 ports Type-I codebooks or up to 4 ports non-PMI feedback CSI. High latency CSI refers to CSI other than low latency CSI. For a normal terminal, (Z, Z') is defined in a unit of OFDM symbols. Here, Z represents the minimum CSI processing time until a CSI report is performed after receiving aperiodic CSI triggering DCI. In addition, Z' refers to the minimum CSI processing time until a CSI report is performed after receiving a CSI-RS for a channel/interference.

Additionally, a terminal reports the number of CSI which may be calculated at the same time.

Quasi-co Locaton (QCL)

An antenna port is defined so that a channel where a symbol in an antenna port is transmitted can be inferred from a channel where other symbol in the same antenna port is transmitted. When a property of a channel where a symbol in one antenna port is carried may be inferred from a channel where a symbol in other antenna port is carried, it may be said that 2 antenna ports are in a QC/QCL(quasi co-located or quasi co-location) relationship.

Here, the channel property includes at least one of delay spread, doppler spread, frequency/doppler shift, average received power, received timing/average delay, or a spatial RX parameter. Here, a spatial Rx parameter means a spatial (Rx) channel property parameter such as an angle of arrival.

A terminal may be configured at list of up to M TCI-State configurations in a higher layer parameter PDSCH-Config to decode a PDSCH according to a detected PDCCH having intended DCI for a corresponding terminal and a given serving cell. The M depends on UE capability.

Each TCI-State includes a parameter for configuring a quasi co-location relationship between ports of one or two DL reference signals and a DM-RS(demodulation reference signal) of a PDSCH.

A quasi co-location relationship is configured by a higher layer parameter qcl-Type1 for a first DL RS and qcl-Type2 for a second DL RS (if configured). For two DL RSs, a QCL type is not the same regardless of whether a reference is a same DL RS or a different DL RS.

A QCL type corresponding to each DL RS is given by a higher layer parameter qcl-Type of QCL-Info and may take one of the following values.

- 'QCL-TypeA': {Doppler shift, Doppler spread, average delay, delay spread}
- 'QCL-TypeB': {Doppler shift, Doppler spread}
- 'QCL-TypeC': {Doppler shift, average delay}
- 'QCL-TypeD': {Spatial Rx parameter}

For example, when a target antenna port is a specific NZP CSI-RS, it may be indicated/configured that a corresponding NZP CSI-RS antenna port is quasi-colocated with a specific TRS with regard to QCL-Type A and is quasi-colocated with a specific SSB with regard to QCL-Type D. A terminal received such indication/configuration may receive a corresponding NZP CSI-RS by using a doppler, delay value measured in a QCL-TypeA TRS and apply a Rx beam used for receiving QCL-TypeD SSB to reception of a corresponding NZP CSI-RS.

UE may receive an activation command by MAC CE signaling used to map up to 8 TCI states to a codepoint of a DCI field 'Transmission Configuration Indication'.

Operation related to Multi-TRPs

A coordinated multi point (CoMP) scheme refers to a scheme in which a plurality of base stations effectively control interference by exchanging (e.g., using an X2 interface) or utilizing channel information (e.g., RI/CQI/PMI/LI(layer indicator), etc.) fed back by a terminal and cooperatively transmitting to a terminal. According to a scheme used, a CoMP may be classified into joint transmission(JT), coordinated Scheduling(CS), coordinated Beamforming(CB), dynamic Point Selection(DPS), dynamic Point Blocking(DPB), etc.

M-TRP transmission schemes that M TRPs transmit data to one terminal may be largely classified into i) eMBB M-TRP transmission, a scheme for improving a transfer rate, and ii) URLLC M-TRP transmission, a scheme for increasing a reception success rate and reducing latency.

In addition, with regard to DCI transmission, M-TRP transmission schemes may be classified into i) M-TRP transmission based on M-DCI(multiple DCI) that each TRP transmits different DCIs and ii) M-TRP transmission based on S-DCI(single DCI) that one TRP transmits DCI. For example, for S-DCI based M-TRP transmission, all scheduling information on data transmitted by M TRPs should be delivered to a terminal through one DCI, it may be used in an environment of an ideal BackHaul (ideal BH) where dynamic cooperation between two TRPs is possible.

For TDM based URLLC M-TRP transmission, scheme 3/4 is under discussion for standardization. Specifically, scheme 4 means a scheme in which one TRP transmits a transport block(TB) in one slot and it has an effect to improve a probability of data reception through the same TB received from multiple TRPs in multiple slots. Meanwhile, scheme 3 means a scheme in which one TRP transmits a TB through consecutive number of OFDM symbols (i.e., a symbol group) and TRPs may be configured to transmit the same TB through a different symbol group in one slot.

In addition, UE may recognize PUSCH (or PUCCH) scheduled by DCI received in different control resource sets(CORESETs) (or CORESETs belonging to different CORESET groups) as PUSCH (or PUCCH) transmitted to different TRPs or may recognize PDSCH (or PDCCH) from different TRPs. In addition, the below-described method for UL transmission (e.g., PUSCH/PUCCH) transmitted to different TRPs may be applied equivalently to UL transmission (e.g., PUSCH/PUCCH)transmitted to different panels belonging to the same TRP.

In addition, MTRP-URLLC may mean that a M TRPs transmit the same transport block(TB) by using different layer/time/frequency. A UE configured with a MTRP-URLLC transmission scheme receives an indication on multiple TCI state(s) through DCI and may assume that data received by using a QCL RS of each TCI state are the same TB. On the other hand, MTRP-eMBB may mean that M TRPs transmit different TBs by using different layer/time/frequency. A UE configured with a MTRP-eMBB transmission scheme receives an indication on multiple TCI state(s) through DCI and may assume that data received by using a QCL RS of each TCI state are different TBs. In this regard, as UE separately classifies and uses a RNTI configured for MTRP-URLLC and a RNTI configured for MTRP-eMBB, it may decide/determine whether the corresponding M-TRP transmission is URLLC transmission or eMBB transmission. In other words, when CRC masking of DCI received by UE is performed by using a RNTI configured for MTRP-URLLC, it may correspond to URLLC transmission, and when CRC masking of DCI is performed by using a RNTI configured for MTRP-eMBB, it may correspond to eMBB transmission.

Hereinafter, a CORESET group ID described/mentioned in the present disclosure may mean an index/identification information (e.g., an ID, etc.) for distinguishing a CORESET for each TRP/panel. In addition, a CORESET group may be a group/union of CORESET distinguished by an index/identification information (e.g., an ID)/the CORESET group ID, etc. for distinguishing a CORESET for each TRP/panel. In an example, a CORESET group ID may be specific index information defined in a CORESET configuration. In this case, a CORESET group may be configured/indicated/defined by an index defined in a CORESET configuration for each CORESET. Additionally/alternatively, a CORESET group ID may mean an index/identification information/an indicator, etc. for distinguishment/identification between CORESETs configured/associated with each TRP/panel. Hereinafter, a CORESET group ID described/mentioned in the present disclosure may be expressed by being substituted with a specific index/specific identification information/a specific indicator for distinguishment/identification between CORESETs configured/associated with each TRP/panel. The CORESET group ID, i.e., a specific index/specific identification information/a specific indicator for distinguishment/identification between CORESETs configured/associated with each TRP/panel may be configured/indicated to a terminal through higher layer signaling (e.g., RRC signaling)/L2 signaling (e.g., MAC-CE)/L1 signaling (e.g., DCI), etc. In an example, it may be configured/indicated so that PDCCH detection will be performed per each TRP/panel in a unit of a corresponding CORESET group (i.e., per TRP/panel belonging to the same CORESET group). Additionally/alternatively, it may be configured/indicated so that uplink control information (e.g., CSI, HARQ-A/N(ACK/NACK), SR(scheduling request)) and/or uplink physical channel resources (e.g., PUCCH/PRACH/SRS resources) are separated and managed/controlled per each TRP/panel in a unit of a corresponding CORESET group (i.e., per TRP/panel belonging to the same CORESET group). Additionally/alternatively, HARQ A/N(process/retransmission) for PDSCH/PUSCH, etc. scheduled per each TRP/panel may be managed per corresponding CORESET group (i.e., per TRP/panel belonging to the same CORESET group).

For example, a higher layer parameter, ControlResourceSet information element (IE), is used to configure a time/frequency control resource set (CORESET). In an example, the control resource set (CORESET) may be related to detection and reception of downlink control information. The ControlResourceSet IE may include a CORESET-related ID (e.g., controlResourceSetID)/an index of a CORESET pool for a CORESET (e.g., CORESETPoolIndex)/a time/frequency resource configuration of a CORESET/TCI information related to a CORESET, etc. In an example, an index of a CORESET pool (e.g., CORESETPoolIndex) may be configured as 0 or 1. In the description, a CORESET group may correspond to a CORESET pool and a CORESET group ID may correspond to a CORESET pool index (e.g., CORESETPoolIndex).

NCJT(Non-coherent joint transmission) is a scheme in which a plurality of transmission points (TP) transmit data to one terminal by using the same time frequency resource, TPs transmit data by using a different DMRS(Demodulation Multiplexing Reference Signal) between TPs through a different layer (i.e., through a different DMRS port).

A TP delivers data scheduling information through DCI to a terminal receiving NCJT. Here, a scheme in which each TP participating in NCJT delivers scheduling information on data transmitted by itself through DCI is referred to as 'multi DCI based NCJT'. As each of N TPs participating in NCJT transmission transmits DL grant DCI and a PDSCH to UE, UE receives N DCI and N PDSCHs from N TPs. Meanwhile, a scheme in which one representative TP delivers scheduling information on data transmitted by itself and data transmitted by a different TP (i.e., a TP participating in NCJT) through one DCI is referred to as 'single DCI based NCJT'. Here, N TPs transmit one PDSCH, but each TP transmits only some layers of multiple layers included in one PDSCH. For example, when 4-layer data is transmitted, TP 1 may transmit 2 layers and TP 2 may transmit 2 remaining layers to UE.

Hereinafter, partially overlapped NCJT will be described.

In addition, NCJT may be classified into fully overlapped NCJT that time frequency resources transmitted by each TP are fully overlapped and partially overlapped NCJT that only some time frequency resources are overlapped. In other words, for partially overlapped NCJT, data of both of TP 1 and TP 2 are transmitted in some time frequency resources and data of only one TP of TP 1 or TP 2 is transmitted in remaining time frequency resources.

Hereinafter, a method for improving reliability in Multi-TRP will be described.

As a transmission and reception method for improving reliability using transmission in a plurality of TRPs, the following two methods may be considered.

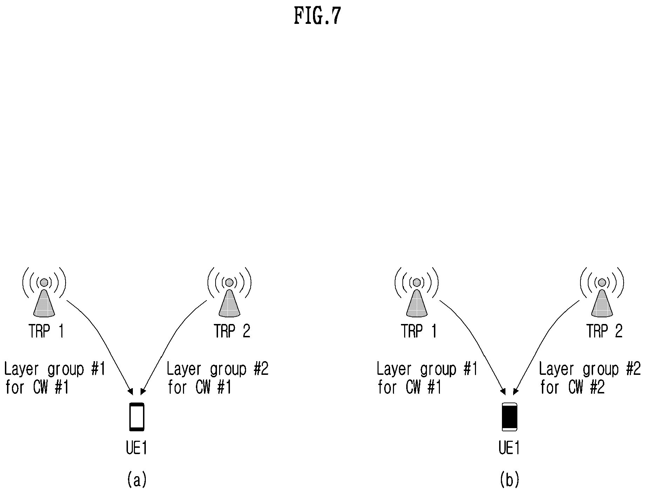

FIG. 7 illustrates a method of multiple TRPs transmission in a wireless communication system to which the present disclosure may be applied.

In reference to FIG. 7(a), it is shown a case in which layer groups transmitting the same codeword(CW)/transport block(TB) correspond to different TRPs. Here, a layer group may mean a predetermined layer set including one or more layers. In this case, there is an advantage that the amount of transmitted resources increases due to the number of a plurality of layers and thereby a robust channel coding with a low coding rate may be used for a TB, and additionally, because a plurality of TRPs have different channels, it may be expected to improve reliability of a received signal based on a diversity gain.

In reference to FIG. 7(b), an example that different CWs are transmitted through layer groups corresponding to different TRPs is shown. Here, it may be assumed that a TB corresponding to CW #1 and CW #2 in the drawing is identical to each other. In other words, CW #1 and CW #2 mean that the same TB is respectively transformed through channel coding, etc. into different CWs by different TRPs. Accordingly, it may be considered as an example that the same TB is repetitively transmitted. In case of FIG. 15(b), it may have a disadvantage that a code rate corresponding to a TB is higher compared to FIG. 15(a). However, it has an advantage that it may adjust a code rate by indicating a different RV (redundancy version) value or may adjust a modulation order of each CW for encoded bits generated from the same TB according to a channel environment.

According to methods illustrated in FIG. 7(a) and FIG. 7(b) above, probability of data reception of a terminal may be improved as the same TB is repetitively transmitted through a different layer group and each layer group is transmitted by a different TRP/panel. It is referred to as a SDM (Spatial Division Multiplexing) based M-TRP URLLC transmission method. Layers belonging to different layer groups are respectively transmitted through DMRS ports belonging to different DMRS CDM groups.

In addition, the above-described contents related to multiple TRPs are described based on an SDM (spatial division multiplexing) method using different layers, but it may be naturally extended and applied to a FDM (frequency division multiplexing) method based on a different frequency domain resource (e.g., RB/PRB (set), etc.) and/or a TDM (time division multiplexing) method based on a different time domain resource (e.g., a slot, a symbol, a sub-symbol, etc.).

Method for transmission and reception of channel state information

In the present disclosure, '/' may mean including all contents separated by / (i.e., and) or including only some of the contents separated by / (i.e., or).

Non-coherent joint transmission (NCJT) channel measurement resource (CMR) may mean a NZP-CSI-RS resource for channel measurement paired for calculation/derivation/reporting of NCJT CSI (i.e., multi-TRP (M-TRP) CSI). That is, it may mean a NZP-CSI-RS resource for channel measurement paired for calculation/derivation/reporting of NCJT CSI (i.e., multi-TRP (M-TRP) CSI) based on the NCJT measurement hypothesis.

In addition, in the present disclosure, a single TRP (STRP) CMR means an NZP-CSI-RS resource for channel measurement for STRP CSI calculation/derivation/reporting. That is, the STRP CMR refers to the NZP-CSI-RS resource for channel measurement for calculating/deriving/reporting the STRP CSI based on the STRP measurement hypothesis.

This will be described with reference to the drawings below.

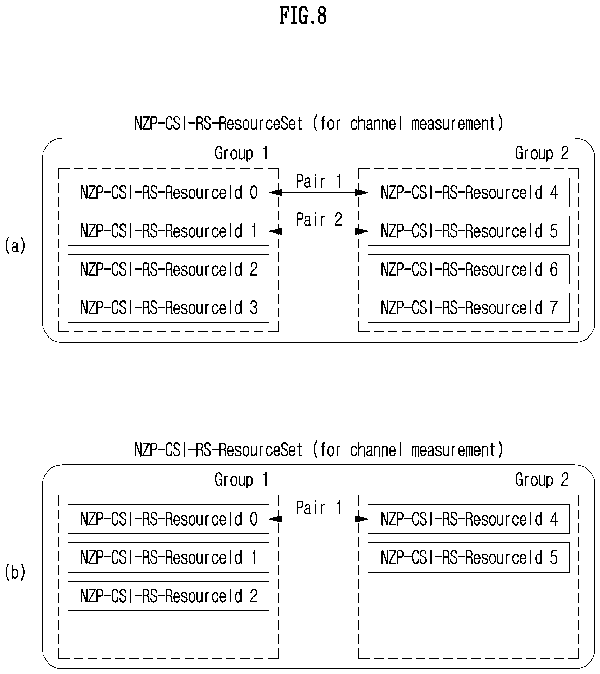

FIG. 8 illustrates an NZP-CSI-RS resource set for channel measurement in a wireless communication system to which the present disclosure may be applied.

FIG. 8(a) and FIG. 8(b) illustrate the configuration of an NZP-CSI-RS resource set for channel measurement. For example, the NZP-CSI-RS resource set for channel measurement may be configured by higher layer signaling (e.g., NZP-CSI-RS-ResourceSet). An NZP-CSI-RS resource set for channel measurement used (referenced) by a UE for CSI reporting may be identified/specified by higher layer configuration for CSI reporting (e.g., CSI-ReportConfig).

N (N is a natural number) CMR pair (s) and two CMR groups may be configured for each NZP-CSI-RS resource set for channel measurement. That is, an NZP-CSI-RS resource set for one channel measurement may include two resource groups for NZP-CSI-RS resources, and the NZP-CSI-RS included in the NZP-CSI-RS resource set Resources may be grouped into two groups (i.e., group 1 and group 2 in FIG. 8). Here, each resource group may correspond to a different TRP. In addition, the number of NZP-CSI-RS resources belonging to each resource group may be the same as shown in FIG. 8(a) or may be different as shown in FIG. 8(b).

In addition, two NZP-CSI-RS resources belonging to different resource groups may be paired (pair 1, pair 2 in FIG. 8). That is, one NZP-CSI-RS resource belonging to group 1 and one NZP-CSI-RS resource belonging to group 2 may be configured as a resource pair.

In FIG. 8(a), a case where an NZP-CSI-RS resource corresponding to NZP-CSI-RS-ResourceId 0 and an NZP-CSI-RS resource corresponding to NZP-CSI-RS-ResourceId 4 may be configured as pair 1 and an NZP-CSI-RS resource corresponding to NZP-CSI-RS-ResourceId 1 and an NZP-CSI-RS resource corresponding to NZP-CSI-RS-ResourceId 5 may be configured as pair 2 is exemplified. In this case, NZP-CSI-RS resources having NZP-CSI-RS-ResourceId 0, 1, 4, and 5 may correspond to NCJT CMR.

FIG. 8(b) illustrates a case where an NZP-CSI-RS resource corresponding to NZP-CSI-RS-ResourceId 0 and an NZP-CSI-RS resource corresponding to NZP-CSI-RS-ResourceId 4 are configured as pair 1. In this case, NZP-CSI-RS resources having NZP-CSI-RS-ResourceId 0 and 4 may correspond to NCJT CMR.

In addition, resources in which a pair is not configured among the NZP-CSI-RS resources belonging to each group may be referred to as STRP CMR in the present disclosure. In FIG. 8(a), NZP-CSI-RS resources having NZP-CSI-RS- ResourceId 2, 3, 6, and 7 may correspond to STRP CMR. Similarly, in FIG. 8(b), NZP-CSI-RS resources having NZP-CSI-RS- ResourceId 1, 2, and 5 may correspond to STRP CMR.

Each resource pair configured in the NZP-CSI-RS resource set may correspond to a CRI for one MTRP, and each NZP-CSI-RS resource not belonging to a resource pair may correspond to a CRI for one STRP. Therefore, when reporting CSI for a channel with MTRP (hereinafter referred to as MTRP CSI), the UE may report any one resource pair (i.e., CRI) among configured resource pairs to the base station. In addition, when reporting CSI for a channel with STRP (hereinafter referred to as STRP CSI), the UE may report any one resource not belonging to a resource pair (i.e., CRI) to the base station.

Hereinafter, before describing the methods proposed in the present disclosure, operations related to M-TRP will be described.

1) Description of M-TRP single frequency network (SFN) (common layer NCJT)

In the NR Rel-17 standard, enhancement of the SFN transmission method in which the M-TRP transmits the same data through the same layer and the same DMRS port in the same time/frequency resource domain has been in progress. For example, in layer 1 M-TRP SFN transmission, TRP 1 and TRP 2 transmit the same data to the UE using the same DMRS port and the same time/frequency resource. Here, as the DL QCL beam information (i.e., the QCL reference RS configured in the TCI state) for the DMRS is configured for each TRP, both QCL beam information for TRP 1 and QCL beam information for TRP 2 may be configured for the DMRS port. Since the same data transmitted by the two TRPs is received through one DMRS port, the channel estimated through the DMRS port corresponds to a composed channel in which the DL channels of TRP 1 and DL channels of TRP 2 are combined. Here, the composed channels appear randomly as constructive sums or destructive sums because the channel phases of the respective TRPs are not aligned with each other. From this point of view, SFN transmission may be regarded as a type of M-TRP NCJT, and since MTRP transmits a common layer, it is referred to as common layer NCJT.

2) Description of M-TRP NCJT (independent layer NCJT)

In NR Rel-16, M-TRP NCJT has been introduced. The two TRPs transmit different data using different layers/different DMRS ports. For example, DMRS ports belonging to different CDM groups are grouped, and the DMRS port(s) belonging to the first CDM group is received using the first QCL beam information (i.e., the configured first TCI state), and the DMRS port(s) belonging to the second CDM group is received using the second QCL beam information (i.e., the configured second TCI state). In this way, since the layers/DMRS ports transmitted by the two TRPs are distinguished from each other and data is not transmitted/received through a composed channel, there is no need to align the channel phases of the two TRPs. Therefore, this is referred to as non-coherent JT, and since an independent layer is transmitted for each TRP, it is referred to as independent layer NCJT.

3) Description of M-TRP CJT (Coherent JT)

Similar to M-TRP SFN, M-TRP CJT transmits the same data in the same time/frequency resource domain as the M-TRP through the same layer and the same DMRS port. However, unlike M-TRP SFN, since the channel phases of each TRP are aligned with each other in M-TRP CJT, two channels are ideally constructively summed to generate a composed channel, and as a result, a higher signal-to-noise ratio (SNR) gain is obtained through beamforming than SFN. In order for the channel phases of each TRP to be aligned with each other, the UE may add the phase difference between the two TRP channels to the existing CSI and provide feedback. In addition, when data is transmitted in multi-layers, a case in which CJT transmission is performed in some layers but only a single TRP transmission is performed in some layers may also be supported. For example, when transmitting a rank 2 PDSCH, TRPs 1 and 2 in the first layer perform CJT and both TRPs transmit the same data, but only TRP 1 may transmit data in the second layer.

For example, the above-described Joint Transmission (JT) method may be classified into three categories as follows.

- Different layer JT: a method for transmitting data through independent layers/ports by different TRPs (e.g., layer 0/1 for TRP 1 and layer 2/3 for TRP 2)
- Common layer JT: a method for transmitting data through the same layer/port by different TRPs (e.g., layer 0/2 for TRP 1/2)
- Combined JT: A combination of Different layer JT and Common layer JT, a method for transmitting data through the same layer/port and additionally transmitting data through independent layers/ports by different TRPs (e.g., layer 0/1/2 for TRP 1 and layer 0/1 for TRP 2)

Regarding the layer indicator (LI) reporting method, in the NR Rel-17 NCJT CSI enhancement standardization, the UE reports the LI for each CMR (ie, each TRP), and consequently, the operation of reporting two LIs has been agreed. As a specific example, when reporting CSI according to the (single-DCI based) M-TRP NCJT method, the UE may be configured/defined to report two Rank Indicators (RIs), two Precoding Matrix Indicators (PMIs), two LIs and one channel quality indicator (CQI) for each codeword.

However, if the above-described Common layer JT scheme, Common layer JT scheme, and/or Combined JT scheme not discussed in NR Rel-17 are introduced later (e.g., NR Rel-18), a new LI reporting method may be required.

For example, in relation to the Coherent Joint Transmission (CJT) method, which is expected to be discussed after NR Rel-18, when the CJT method is introduced, an LI reporting method according to the type of the JT method needs to be newly defined. In this case, the common layer JT method may correspond to the CJT method, the different layer JT method may correspond to the NCJT method, and the combined JT method may correspond to a combination of the CJT method and the NCJT method.

In this regard, the three methods described above (i.e., the common layer JT method, the different layer JT method, and the common JT method) may be explicitly or implicitly configured/indicated to the terminal. For example, based on an association between a resource pair (e.g., CMR pair) and a layer/port configured in the UE, the UE may be configured to recognize/identify the type of the JT scheme. Alternatively, the base station may be configured to deliver information (e.g., 2-bit information, etc.) related to the type of the JT method to the UE through certain signaling (e.g., RRC signaling, MAC-CE, DCI, etc.), and the UE may be configured to identify/check the type of JT scheme based on the corresponding information.

Accordingly, the present disclosure proposes an LI reporting method according to the type of JT scheme.

In the present disclosure, it is assumed that two TRPs (e.g., TRP1/TRP2) operate for convenience of description. However, this is for convenience of explanation, and this assumption does not limit the technical scope of the proposed method of the present disclosure.

In the present disclosure, the description of TRP is for convenience of description, and TRP may also be interpreted as terms such as panel/beam.

In the present disclosure, layer 1 (L1) signaling may mean DCI-based dynamic signaling between a base station and a UE, and layer 2 (L2) signaling may mean higher layer signaling based on an RRC/MAC control element (CE) between a base station and a UE.

Embodiment 1

This embodiment relates to a LI reporting method based on a common layer JT scheme among the types of JT schemes described above.

For example, for CSI calculation and/or reporting for the common layer JT method, when a CMR pair and/or a CMR set pair are configured/indicated to a UE, the UE may be configured to report a preferred single LI value based on a concatenated channel that may be estimated from the pair. The pair may refer to a CMR pair and/or a CMR set pair configured for the UE.

In the above example, the concatenated channel may mean a composed channel that may be derived from $H_{eff1}$ and $H_{eff2}$ estimated based on different resources within the pair (e.g., NZP-CSI-RS resources), that is, $H_{eff1} + H_{eff2} = (H_1 + H_2 * r) * W_1$.

In addition, as an example of concatenated channel generation in the present disclosure, a UE may assume that two n port CSI-RSs and m port CSI-RSs configured as one CMR pair are one (n+m) port CSI-RS, and the corresponding (n+m) port CSI-RS may be assumed to be one CMR and RI/PMI/CQI may be calculated. That is, the PMI and RI may be calculated using the codebook for (n+m) port, and the CQI that may be achieved when the calculated PMI/RI is applied to data transmission may be calculated.

The above-mentioned $H_{eff1}$ and $H_{eff2}$ may mean channels to which precoding matrices $W_1$ and $W_2$ estimated from each of the different resources within the pair are applied. For example, $H_{eff1} = H_1*W_1$, $H_{eff2} = H_2*W_2 = H_2*r*W_1$, and in this example, r may mean co-phase information between different TRPs.

In relation to this embodiment, when the common layer JT method is configured/indicated to the UE, the number of layers of $W_1$ and $W_2$ may be defined/configured/indicated to be the same.

Embodiment 2

This embodiment relates to a LI reporting method based on the Combined JT scheme among the types of JT schemes described above.

For example, for CSI calculation and/or reporting for the Combined JT method in which the Common layer JT method and the Different layer JT method are simultaneously supported, when a CMR pair and/or CMR set pair are configured/indicated to the UE, the UE may report the preferred single/multiple LI values separately/together based on the preferred single LI value and/or an independent channel that may be estimated by each resource within the pair, based on the concatenated channel that may be estimated from the pair. The pair may mean a CMR pair and/or a CMR set pair configured for the UE.

In the above example, the concatenated channel may refer to a composed channel that may be derived from $H_{eff1,1}$ and $H_{eff2,1}$ estimated based on different resources (e.g., NZP-CSI-RS resources) within the pair, that is $H_{eff1,1}+H_{eff2,1}$.

The UE may report the single LI value preferred by the UE for the concatenated channel. The above-described $H_{eff1,1}$ and $H_{eff2,1}$ may refer to channels to which $W_{1,1}$ and $W_{2,1}$, which constitute part of the precoding matrix estimated from each of the different resources within the pair, are applied. For example, if $H_{eff1} = H_1*W_1 = H_1* [W_{1,1} \ W_{1,2}]$, $H_{eff1,1} = H_1*W_{1,1}$. Additionally, if $H_{eff2} = H_2*W_2 = H_2* [W_{2,1} \ W_{2,2}]$, $H_{eff2,1} = H_2*W_{2,1}$.

In relation to this embodiment, when the common layer JT method is configured/indicated to the UE, the number of layers of $W_{1,1}$ and $W_{2,1}$ may be defined/configured/indicated to be the same.

Additionally, in relation to this embodiment, the number of layers for the common layer JT method may be determined based on the smaller number of layers among $W_1$ and W2.

Additionally, in relation to this embodiment, when the common layer JT method is configured/indicated to the UE, the number of layers of $W_{1,2}$ and $W_{2,2}$ may be the same or may be defined differently.

In the above example, the independent channel may mean a channel to which $W_{1,2}$ and $W_{2,2}$, which constitute part of the precoding matrix estimated from each of the different resources (within the pair), are applied. For example, $H_{eff1,2} = H_1*W_{1,2}$ and $H_{eff2,2} = H_2*W_{2,2}$.

The UE may report its preferred LI value for each independent channel. For example, the first LI value for $H_{eff1,2}$ and the second LI value for $H_{eff2,2}$ may be reported, respectively.

When the number of layers for the common layer JT method is determined based on the smaller number of layers among $W_1$ and $W_2$, the UE may report a single LI value preferred by the UE based on the channel corresponding to the large number of layers. This may correspond to a method of applying priority when there is a limit to the number of LI reports. For example, for 2 layers for $W_1$ and 4 layers for $W_2 = [W_{2,1} \ W_{2,2}]$, $W_{2,1}$ and $W_{2,2}$ may each correspond to 2 layers. In this case, the UE may report a single LI value based on $H_{eff2,2} = H_2*W_{2,2}$ corresponding to the Different layer JT scheme.

In the above-described embodiments of the present disclosure, one or more layers may correspond to the common layer JT method, and one or more layers may correspond to different TRPs for the different layer JT method. At this time, if the maximum number of Phase Tracking (PT)-RSs configured/indicated to the UE is 2, the UE may omit LI reporting corresponding to the common layer JT method. The UE may be configured/indicated/defined to report (to the base station) a number of LI value(s) corresponding to the TRP(s) performing the Different layer JT method. For example, the UE may be configured to report the first LI value for the layer corresponding to TRP 1 and the second LI value for the layer corresponding to TRP 2, and to omit reporting the LI value corresponding to the common layer of TRP 1/2.

In addition, in the embodiments of the present disclosure described above, when the number of layers transmitted from the two TRPs is different, the size of LI (i.e., LI value) to be reported by the UE may be determined by a specific value. For example, if the number of layers corresponding to different resources (e.g., NZP-CSI-RS resources) configured for the UE are different, the UE may report LI based on a size determined by specific values such as a preset maximum value, minimum value, TRP 1, TRP 2, etc.

In addition, in the embodiments of the present disclosure described above, when the UE reports LI for the common layer JT method, the UE may report information on a more dominant TRP together with the corresponding LI report. Here, information on the TRP may include resource ID, QCL RS associated with the resource, etc. If the stake and/or dominant of each TRP of a specific layer indicated by LI are similar (e.g., below a certain threshold), the UE may report information on a specific TRP (e.g., TRP 1/2, etc.).

In addition, in the embodiments of the present disclosure described above, with regard to the LI value that the UE shall report, the base station may configure/indicate the UE whether the LI value to be reported is TRP-common LI and/or TRP-specific LI. Additionally, the configuration/indication may be interpreted as referring to the number of LI values that the UE shall report. Additionally/alternatively, if LI is included in the configuration for the report quantity (e.g., CSI report quantity) (i.e., if the UE is configured to report the LI value in the corresponding CSI report), the number of LIs to be reported by the UE, assumptions/information on CSI calculation, etc. may be configured/indicated to the UE.

Here, in order to configure/indicate the UE on assumptions/information on CSI calculation, certain assumptions/information may be configured/indicated based on explicit and/or implicit methods. For example, (by the base station) the UE may be configured/indicated as to whether it is a TRP common LI and/or a TRP specific LI, whether it is a common layer JT method, whether it is a combined JT method, etc. To this end, assumptions/information for the corresponding CSI calculation may be implicitly configured/indicated based on the presence or absence of co-phase information of the report quantity (e.g., CSI report quantity) configured in the UE.

In addition, for example, in the embodiments of the present disclosure described above, if the first RI value (i.e., RI 1 for TRP 1) and the second RI value (i.e., RI 1 for TRP 2) are constrained to be equal, the base station and/or the UE may be configured/defined to operate based on the common layer JT method. Additionally/alternatively, when there is no limitation that the first RI value (i.e., RI 1 for TRP 1) and the second RI value (i.e., RI 1 for TRP 2) are the same, and the first RI value and the second RI are different by the calculated RI value, the base station and/or the UE may be configured/defined to operate based on the Combined JT method.

It is obvious that the above-described example may be interpreted as an example for the method proposed in the embodiments of the present disclosure, and is not limited thereto. Additionally, explicit methods and/or implicit methods other than the examples described above may also be considered/applied.

The operation methods according to the embodiments and detailed examples of the present disclosure described above may be applied independently, or two or more operation methods may be mixed and applied together.

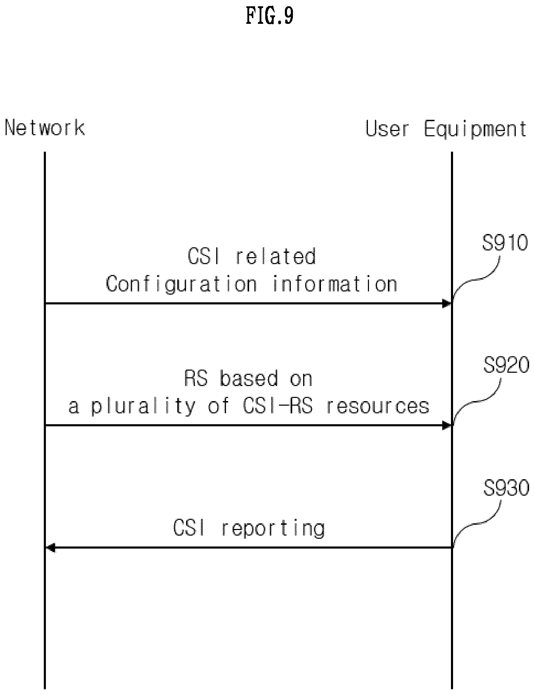

FIG. 9 is a diagram illustrating a signaling procedure between a network and a UE for a method of transmitting and receiving channel state information according to an embodiment of the present disclosure.

FIG. 9 illustrates a signaling between a network (e.g., TRP 1, TRP 2) and a terminal (i.e., UE) in a situation of multiple TRP (i.e. M-TRP, or multiple cells, hereinafter all TRPs can be replaced by cells) to which the methods proposed in the present disclosure (e.g., any one of Embodiment 1, Embodiment 2, and detailed embodiments thereof, or a combination of one or more (detailed) embodiments) may be applied.

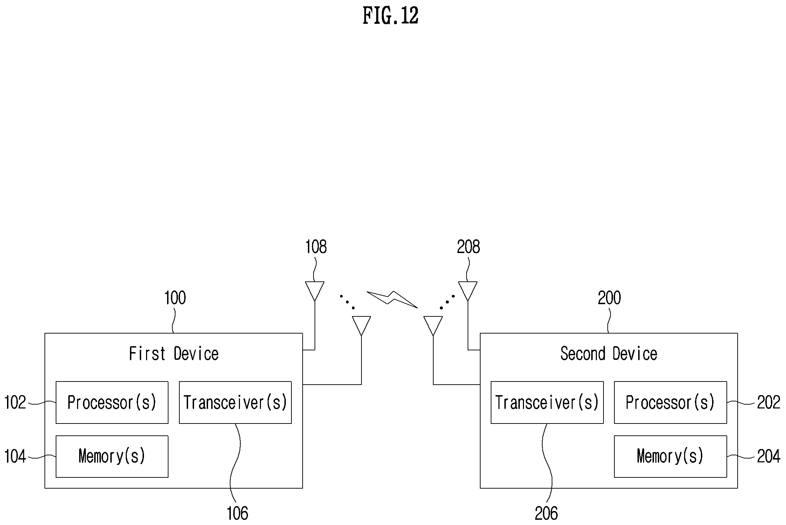

Here, the UE/Network is only an example, and may be replaced with various devices as described in FIG. 12 described later. FIG. 9 is merely for convenience of explanation and does not limit the scope of the present disclosure. Additionally, some step(s) shown in FIG. 9 may be omitted depending on the situation and/or settings.

In the following description, the network may be one base station including multiple TRPs, or may be one cell including multiple TRPs. For example, an ideal/non-ideal backhaul may be configured between TRP 1 and TRP 2 that constitute the network. In addition, the following description is based on multiple TRPs, but may be equally extended and applied to transmission through multiple panels. In addition, in the present disclosure, the operation of the UE receiving a signal from TRP1/TRP2 may be interpreted/explained (or may be an operation) as an operation of the UE receiving a signal from the network (via/using TRP1/2), and the operation of the UE transmitting a signal to TRP1/TRP2 may be interpreted/explained (or may be an operation) as the operation of the UE transmitting a signal to the network (via/using TRP1/TRP2), and it may be explained vice versa.

In addition, as described above, "TRP" may be applied instead of expressions such as a panel, an antenna array, a cell (e.g., a macro cell / small cell / pico cell, etc.), transmission point (TP), base station (base station, gNB, etc.). As described above, TRPs may be classified according to information (e.g., index, identifier (ID)) about the CORESET group (or CORESET pool). For example, when one UE is configured to transmit and receive with multiple TRPs (or cells), this may mean that multiple CORESET groups (or CORESET pools) are configured for one UE. Configuration of such a CORESET group (or CORESET pool) may be performed through higher layer signaling (e.g., RRC signaling, etc.). Additionally, a base station may refer to a general term for objects that transmit and receive data with a UE. For example, the base station may be a concept that includes one or more Transmission Points (TPs), one or more Transmission and Reception Points (TRPs), etc. Additionally, the TP and/or TRP may include a base station panel, a transmission and reception unit, etc.

Referring to FIG. 9, for convenience of explanation, signaling between one network and a UE is considered, but of course, the signaling method may be extended and applied to signaling between multiple TRPs and multiple UEs.

Referring to FIG. 9, in step S910, the network transmits CSI-related configuration information to the UE. That is, the UE receives CSI-related configuration information from the network.

CSI-related configuration information may include information for configuring an operation based on the previously proposed method (e.g., any one of Embodiment 1, Embodiment 2, and detailed embodiments thereof, or a combination of one or more (detailed) embodiments).

Referring to the above-described CSI-related operations and embodiments, the CSI-related configuration information may include at least one of CSI-interference management (IM) resource-related information, CSI measurement configuration-related information, CSI resource configuration-related information, or CSI report configuration-related information.

In particular, the CSI-related configuration information may include CSI reporting-related configuration information (i.e., CSI reporting settings) (e.g., RRC IE 'CSI-ReportConfig') (hereinafter, first configuration information) and CSI resource-related configuration information (i.e., CSI resource settings) (e.g., RRC IE 'CSI-ResourceConfig') (hereinafter, second configuration information). Additionally, second configuration information may be included in the first configuration information.

In addition, as described above, a plurality of CSI-RS resources for CSI calculation/measurement may be configured in the UE according to the second configuration information, and all or part of a plurality of CSI-RS resources may be configured as one or more resource pairs (i.e., CMR pairs). Here, one or more resource pairs may be configured to be used to derive CSI based on a single pair.

Additionally, the second configuration information may be linked/associated with specific first configuration information, and, according to the reportQuantity in the first configuration information, CSI reporting (e.g., CRI, PMI, RI, CQI, LI, etc.) for a plurality of CSI-RS resources may be configured for the UE based on the linked/associated second configuration information.

For example, as in the above-described embodiment(s), in relation to CSI reporting, configuration (or information) related to the reporting type of layer indication information may be configured/indicated. Here, the configuration related to the reporting type of layer indication information may be based on information indicating a reporting type for at least one of a composed channel for a resource pair (i.e., a CMR pair) or a channel for each of one or more CSI-RS resources configured with the resource pair.

As an example, the UE may be configured/indicated to report a composed channel for a resource pair.

Alternatively, the UE may be configured/instructed to report a composed channel for a resource pair and a channel for each of one or more CSI-RS resources configured for the resource pair.

Additionally, as an example, the above-described first configuration information may include configurations related to the reporting type of the above-described layer indication information. In this regard, the configurations related to the reporting type of layer indication information may be based on whether co-phase information is included in the report quantity configuration included in the first configuration information.

In step S920, the network transmits a reference signal (e.g., CSI-RS, etc.) from a plurality of CSI-RS resources to the UE based on CSI-related configuration information (e.g., second configuration information). That is, the UE receives a reference signal (e.g., CSI-RS, etc.) from a plurality of CSI-RS resources based on CSI-related configuration information (e.g., second configuration information) from the network.

Here, a reference signal may be transmitted from the first TRP to the UE on some of the CSI-RS resources among the plurality of CSI-RS resources, a reference signal may be transmitted from the second TRP to the UE on the remaining CSI-RS resources.

In step S930, the UE transmits CSI to the network based on the CSI-RS and CSI-related configuration information (e.g, first configuration information and/or second configuration information). That is, the network receives CSI based on CSI-RS and CSI-related configuration information from the UE.

For example, as in the above-described embodiment(s), the corresponding CSI may include layer indication information (e.g., LI value).

As a specific example, when the UE is configured/instructed to report a composed channel for a resource pair, CSI may include layer indication information according to the composed channel. Here, the composed channel may be configured as the sum of channels to which precoding matrices (e.g., $W_1$, $W_2$) estimated from different CSI-RS resources within a resource pair are applied. In addition, in this case, the CSI may further inlcude identification information (e.g., ID, etc.) indicating a specific CSI-RS resource (e.g., CSI-RS resource for an dominant TRP) among one or more CSI-RS resources configured to the corresponding resource pair.

As another specific example, based on the UE being configured to report a composed channel for a resource pair and a channel for each of one or more CSI-RS resources configured to that resource pair, CSI may include layer indication information based on the corresponding composed channel and layer indication information based on the channel for each of one or more CSI-RS resources configured as the corresponding resource pair. Here, the composed channel may be based on the sum of channels to which a portion of the precoding matrix estimated from different CSI-RS resources within the corresponding resource pair is applied. Additionally, the channel for each of one or more CSI-RS resources configured as a resource pair may be based on a channel to which the remaining portion of the precoding matrix estimated from different CSI-RS resources within the resource pair is applied. In this case, as in the example described above in this disclosure, based on the maximum number of ports of Phase Tracking (PT)-RS configured for the UE, reporting of layer indication information based on composed channels (or each independent channel) may be omitted.

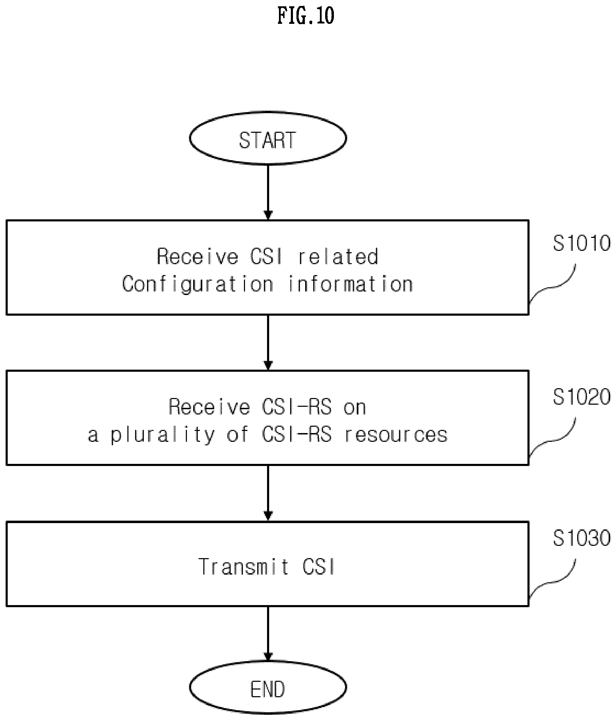

FIG. 10 illustrates the operation of a UE for a method of transmitting and receiving channel state information according to an embodiment of the present disclosure.

In FIG. 10, the operation of the UE based on the previously proposed method (e.g., any one or more (detailed) implementations of the above Embodiment 1, Embodiment 2 and any one of the detailed embodiments thereof, or a combination of one or more (detailed) embodiments) is exemplified. The example of FIG. 10 is for convenience of description and does not limit the scope of the present disclosure. Some step(s) illustrated in FIG. 10 may be omitted depending on circumstances and/or configuration. In addition, the UE of FIG. 10 is only one example, and may be implemented as a device illustrated in FIG. 12 below. For example, the processor 102/202 of FIG. 12 may control to transmit and receive channel/signal/data/information, etc. (e.g., RRC signaling, MAC CE, DCI scheduling UL/DL, SRS, PDCCH, PDSCH, PUSCH, PUCCH, PHICH, etc.) through the transceiver 106/206, and may control to store the transmitted or received channels/signals/data/information, etc. in the memory 104/204.

Referring to FIG. 10, in step S1010, the UE receives CSI-related configuration information from the base station.

CSI-related configuration information may include information for configuring an operation based on the previously proposed method (e.g., any one of Embodiment 1, Embodiment 2, and detailed embodiments thereof, or a combination of one or more (detailed) embodiments). For example, in relation to the above-described embodiments, the CSI-related configuration information may include configurations for resources for performing channel measurement/estimation, configurations for reporting quantity (e.g., LI reporting, etc.), etc.

Since the content of receiving CSI-related configuration information in step S1010 is the same/similar to the description of step S910 of FIG. 9, detailed description of overlapping content will be omitted.

In step S1020, the UE receives a reference signal (e.g., CSI-RS, etc.) from a plurality of CSI-RS resources based on CSI-related configuration information (e.g., second configuration information) from the base station.

Here, a reference signal may be transmitted from the first TRP to the UE on some of the CSI-RS resources among the plurality of CSI-RS resources, and a reference signal may be transmitted from the second TRP to the UE on the remaining CSI-RS resources. That is, when one base station is configured to include a first TRP and a second TRP, the UE may receive CSI-RS from a plurality of CSI-RS resources from the base station. On the other hand, when one base station corresponds to the first TRP and another base station corresponds to the second TRP, the UE may receive a reference signal on some CSI-RS resources from the first base station (i.e., corresponding to the first TRP), and may receive a reference signal on the remaining CSI-RS resources from the second base station (i.e., corresponding to the second TRP).

Since the content of CSI-RS reception in step S1020 is the same/similar to the description of step S920 of FIG. 9, detailed description of overlapping content is omitted.

In step S1030, the UE transmits CSI to the network based on the CSI-RS and CSI-related configuration information (e.g., first configuration information and/or second configuration information).

For example, as in the embodiments of the present disclosure described above, based on a configuration/indication, etc. by the base station, the terminal may configure CSI including composed channel LI information for multiple TRPs and/or LI information corresponding to an independent channel for multiple TRPs, and report the CSI to the network.

Since the content of CSI transmission in step S1030 is the same/similar to the description of step S930 of FIG. 9, detailed description of overlapping content is omitted.

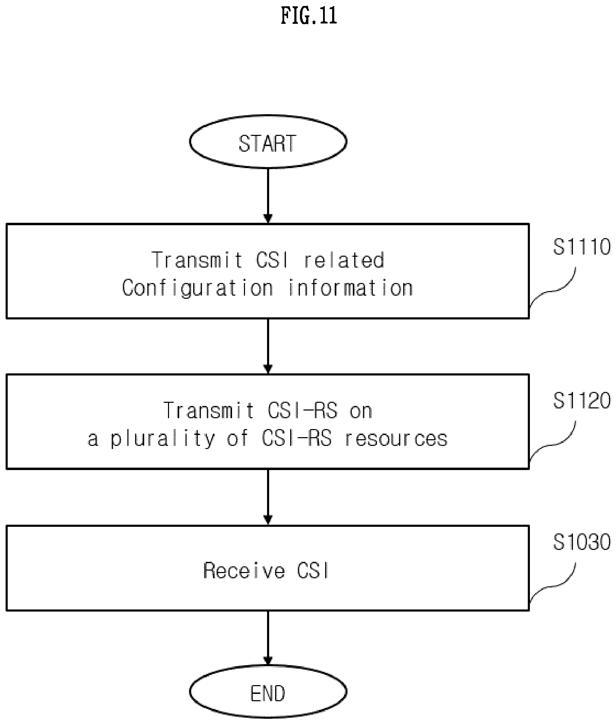

FIG. 11 illustrates the operation of a base station for a method of transmitting and receiving channel state information according to an embodiment of the present disclosure.

In FIG. 11, the operation of the base station based on the previously proposed method (e.g., any one or more (detailed) implementations of the above Embodiment 1, Embodiment 2 and any one of the detailed embodiments thereof, or a combination of one or more (detailed) embodiments) is exemplified. The example of FIG. 11 is for convenience of description and does not limit the scope of the present disclosure. Some step(s) illustrated in FIG. 11 may be omitted depending on circumstances and/or configuration. In addition, the base station of FIG. 11 is only one example, and may be implemented as a device illustrated in FIG. 12 below. For example, the processor 102/202 of FIG. 12 may control to transmit and receive channel/signal/data/information, etc. (e.g., RRC signaling, MAC CE, DCI scheduling UL/DL, SRS, PDCCH, PDSCH, PUSCH, PUCCH, PHICH, etc.) through the transceiver 106/206, and may control to store the transmitted or received channels/signals/data/information, etc. in the memory 104/204.

Referring to FIG. 11, in step S1110, the base station transmits CSI-related configuration information to the UE.

CSI-related configuration information may include information for configuring an operation based on the previously proposed method (e.g., any one of Embodiment 1, Embodiment 2, and detailed embodiments thereof, or a combination of one or more (detailed) embodiments). For example, in relation to the above-described embodiments, the CSI-related configuration information may include configurations for resources for performing channel measurement/estimation, configurations for reporting quantity (e.g., LI reporting, etc.), etc.

Since the content of transmitting CSI-related configuration information in step S1110 is the same/similar to the description of step S910 of FIG. 9, detailed description of overlapping content will be omitted.

In step S1120, the base station transmits a reference signal (e.g., CSI-RS, etc.) on a plurality of CSI-RS resources based on CSI-related configuration information (e.g., second configuration information) to the UE.

Here, a reference signal may be transmitted from the first TRP to the UE on some of the CSI-RS resources among the plurality of CSI-RS resources, and a reference signal may be transmitted from the second TRP to the UE on the remaining CSI-RS resources. That is, when one base station is configured to include a first TRP and a second TRP, the UE may receive CSI-RS from a plurality of CSI-RS resources from the base station. On the other hand, when one base station corresponds to the first TRP and another base station corresponds to the second TRP, the UE may receive a reference signal on some CSI-RS resources from the first base station (i.e., corresponding to the first TRP), and may receive a reference signal on the remaining CSI-RS resources from the second base station (i.e., corresponding to the second TRP).

Since the content of CSI-RS transmission in step S1120 is the same/similar to the description of step S920 of FIG. 9, detailed description of overlapping content is omitted.

In step S1130, the base station receives CSI from the UE based on the CSI-RS and CSI-related configuration information (e.g., first configuration information and/or second configuration information).

For example, as in the embodiments of the present disclosure described above, based on a configuration/indication, etc. by the base station, the corresponding CSI may be configured to include composed channel LI information for multiple TRPs and/or LI information corresponding to an independent channel for multiple TRPs.

Since the content of CSI transmission in step S1130 is the same/similar to the description of step S930 of FIG. 9, detailed description of overlapping content is omitted.

General Device to which the Present Disclosure may be applied

FIG. 14 is a diagram which illustrates a block diagram of a wireless communication device according to an embodiment of the present disclosure.

In reference to FIG. 14, a first wireless device 100 and a second wireless device 200 may transmit and receive a wireless signal through a variety of radio access technologies (e.g., LTE, NR).

A first wireless device 100 may include one or more processors 102 and one or more memories 104 and may additionally include one or more transceivers 106 and/or one or more antennas 108. A processor 102 may control a memory 104 and/or a transceiver 106 and may be configured to implement description, functions, procedures, proposals, methods and/or operation flow charts disclosed in the present disclosure. For example, a processor 102 may transmit a wireless signal including first information/signal through a transceiver 106 after generating first information/signal by processing information in a memory 104. In addition, a processor 102 may receive a wireless signal including second information/signal through a transceiver 106 and then store information obtained by signal processing of second information/signal in a memory 104. A memory 104 may be connected to a processor 102 and may store a variety of information related to an operation of a processor 102. For example, a memory 104 may store a software code including commands for performing all or part of processes controlled by a processor 102 or for performing description, functions, procedures, proposals, methods and/or operation flow charts disclosed in the present disclosure. Here, a processor 102 and a memory 104 may be part of a communication modem/circuit/chip designed to implement a wireless communication technology (e.g., LTE, NR). A transceiver 106 may be connected to a processor 102 and may transmit and/or receive a wireless signal through one or more antennas 108. A transceiver 106 may include a transmitter and/or a receiver. A transceiver 106 may be used together with a RF (Radio Frequency) unit. In the present disclosure, a wireless device may mean a communication modem/circuit/chip.

A second wireless device 200 may include one or more processors 202 and one or more memories 204 and may additionally include one or more transceivers 206 and/or one or more antennas 208. A processor 202 may control a memory 204 and/or a transceiver 206 and may be configured to implement description, functions, procedures, proposals, methods and/or operation flows charts disclosed in the present disclosure. For example, a processor 202 may generate third information/signal by processing information in a memory 204, and then transmit a wireless signal including third information/signal through a transceiver 206. In addition, a processor 202 may receive a wireless signal including fourth information/signal through a transceiver 206, and then store information obtained by signal processing of fourth information/signal in a memory 204. A memory 204 may be connected to a processor 202 and may store a variety of information related to an operation of a processor 202. For example, a memory 204 may store a software code including commands for performing all or part of processes controlled by a processor 202 or for performing description, functions, procedures, proposals, methods and/or operation flow charts disclosed in the present disclosure. Here, a processor 202 and a memory 204 may be part of a communication modem/circuit/chip designed to implement a wireless communication technology (e.g., LTE, NR). A transceiver 206 may be connected to a processor 202 and may transmit and/or receive a wireless signal through one or more antennas 208. A transceiver 206 may include a transmitter and/or a receiver. A transceiver 206 may be used together with a RF unit. In the present disclosure, a wireless device may mean a communication modem/circuit/chip.

Hereinafter, a hardware element of a wireless device 100, 200 will be described in more detail. It is not limited thereto, but one or more protocol layers may be implemented by one or more processors 102, 202. For example, one or more processors 102, 202 may implement one or more layers (e.g., a functional layer such as PHY, MAC, RLC, PDCP, RRC, SDAP). One or more processors 102, 202 may generate one or more PDUs (Protocol Data Unit) and/or one or more SDUs (Service Data Unit) according to description, functions, procedures, proposals, methods and/or operation flow charts included in the present disclosure. One or more processors 102, 202 may generate a message, control information, data or information according to description, functions, procedures, proposals, methods and/or operation flow charts disclosed in the present disclosure. One or more processors 102, 202 may generate a signal (e.g., a baseband signal) including a PDU, a SDU, a message, control information, data or information according to functions, procedures, proposals and/or methods disclosed in the present disclosure to provide it to one or more transceivers 106, 206. One or more processors 102, 202 may receive a signal (e.g., a baseband signal) from one or more transceivers 106, 206 and obtain a PDU, a SDU, a message, control information, data or information according to description, functions, procedures, proposals, methods and/or operation flow charts disclosed in the present disclosure.

One or more processors 102, 202 may be referred to as a controller, a micro controller, a micro processor or a micro computer. One or more processors 102, 202 may be implemented by a hardware, a firmware, a software, or their combination. In an example, one or more ASICs(Application Specific Integrated Circuit), one or more DSPs(Digital Signal Processor), one or more DSPDs(Digital Signal Processing Device), one or more PLDs(Programmable Logic Device) or one or more FPGAs(Field Programmable Gate Arrays) may be included in one or more processors 102, 202. Description, functions, procedures, proposals, methods and/or operation flow charts disclosed in the present disclosure may be implemented by using a firmware or a software and a firmware or a software may be implemented to include a module, a procedure, a function, etc. A firmware or a software configured to perform description, functions, procedures, proposals, methods and/or operation flow charts disclosed in the present disclosure may be included in one or more processors 102, 202 or may be stored in one or more memories 104, 204 and driven by one or more processors 102, 202. Description, functions, procedures, proposals, methods and/or operation flow charts disclosed in the present disclosure may be implemented by using a firmware or a software in a form of a code, a command and/or a set of commands.

One or more memories 104, 204 may be connected to one or more processors 102, 202 and may store data, a signal, a message, information, a program, a code, an instruction and/or a command in various forms. One or more memories 104, 204 may be configured with ROM, RAM, EPROM, a flash memory, a hard drive, a register, a cash memory, a computer readable storage medium and/or their combination. One or more memories 104, 204 may be positioned inside and/or outside one or more processors 102, 202. In addition, one or more memories 104, 204 may be connected to one or more processors 102, 202 through a variety of technologies such as a wire or wireless connection.

One or more transceivers 106, 206 may transmit user data, control information, a wireless signal/channel, etc. mentioned in methods and/or operation flow charts, etc. of the present disclosure to one or more other devices. One or more transceivers 106, 206 may receiver user data, control information, a wireless signal/channel, etc. mentioned in description, functions, procedures, proposals, methods and/or operation flow charts, etc. disclosed in the present disclosure from one or more other devices. For example, one or more transceivers 106, 206 may be connected to one or more processors 102, 202 and may transmit and receive a wireless signal. For example, one or more processors 102, 202 may control one or more transceivers 106, 206 to transmit user data, control information or a wireless signal to one or more other devices. In addition, one or more processors 102, 202 may control one or more transceivers 106, 206 to receive user data, control information or a wireless signal from one or more other devices. In addition, one or more transceivers 106, 206 may be connected to one or more antennas 108, 208 and one or more transceivers 106, 206 may be configured to transmit and receive user data, control information, a wireless signal/channel, etc. mentioned in description, functions, procedures, proposals, methods and/or operation flow charts, etc. disclosed in the present disclosure through one or more antennas 108, 208. In the present disclosure, one or more antennas may be a plurality of physical antennas or a plurality of logical antennas (e.g., an antenna port). One or more transceivers 106, 206 may convert a received wireless signal/channel, etc. into a baseband signal from a RF band signal to process received user data, control information, wireless signal/channel, etc. by using one or more processors 102, 202. One or more transceivers 106, 206 may convert user data, control information, a wireless signal/channel, etc. which are processed by using one or more processors 102, 202 from a baseband signal to a RF band signal. Therefor, one or more transceivers 106, 206 may include an (analogue) oscillator and/or a filter.

Embodiments described above are that elements and features of the present disclosure are combined in a predetermined form. Each element or feature should be considered to be optional unless otherwise explicitly mentioned. Each element or feature may be implemented in a form that it is not combined with other element or feature. In addition, an embodiment of the present disclosure may include combining a part of elements and/or features. An order of operations described in embodiments of the present disclosure may be changed. Some elements or features of one embodiment may be included in other embodiment or may be substituted with a corresponding element or a feature of other embodiment. It is clear that an embodiment may include combining claims without an explicit dependency relationship in claims or may be included as a new claim by amendment after application.

It is clear to a person skilled in the pertinent art that the present disclosure may be implemented in other specific form in a scope not going beyond an essential feature of the present disclosure. Accordingly, the above-described detailed description should not be restrictively construed in every aspect and should be considered to be illustrative. A scope of the present disclosure should be determined by reasonable construction of an attached claim and all changes within an equivalent scope of the present disclosure are included in a scope of the present disclosure.

A scope of the present disclosure includes software or machine-executable commands (e.g., an operating system, an application, a firmware, a program, etc.) which execute an operation according to a method of various embodiments in a device or a computer and a non-transitory computer-readable medium that such a software or a command, etc. are stored and are executable in a device or a computer. A command which may be used to program a processing system performing a feature described in the present disclosure may be stored in a storage medium or a computer-readable storage medium and a feature described in the present disclosure may be implemented by using a computer program product including such a storage medium. A storage medium may include a high-speed random-access memory such as DRAM, SRAM, DDR RAM or other random-access solid state memory device, but it is not limited thereto, and it may include a nonvolatile memory such as one or more magnetic disk storage devices, optical disk storage devices, flash memory devices or other nonvolatile solid state storage devices. A memory optionally includes one or more storage devices positioned remotely from processor(s). A memory or alternatively, nonvolatile memory device(s) in a memory include a non-transitory computer-readable storage medium. A feature described in the present disclosure may be stored in any one of machine-readable mediums to control a hardware of a processing system and may be integrated into a software and/or a firmware which allows a processing system to interact with other mechanism utilizing a result from an embodiment of the present disclosure. Such a software or a firmware may include an application code, a device driver, an operating system and an execution environment/container, but it is not limited thereto.

Here, a wireless communication technology implemented in a wireless device 100, 200 of the present disclosure may include Narrowband Internet of Things for a low-power communication as well as LTE, NR and 6G. Here, for example, an NB-IoT technology may be an example of a LPWAN(Low Power Wide Area Network) technology, may be implemented in a standard of LTE Cat NB1 and/or LTE Cat NB2, etc. and is not limited to the above-described name. Additionally or alternatively, a wireless communication technology implemented in a wireless device 100, 200 of the present disclosure may perform a communication based on a LTE-M technology. Here, in an example, a LTE-M technology may be an example of a LPWAN technology and may be referred to a variety of names such as an eMTC (enhanced Machine Type Communication), etc. For example, an LTE-M technology may be implemented in at least any one of various standards including 1) LTE CAT 0, 2) LTE Cat M1, 3) LTE Cat M2, 4) LTE non-BL(non-Bandwidth Limited), 5) LTE-MTC, 6) LTE Machine Type Communication, and/or 7) LTE M and so on and it is not limited to the above-described name. Additionally or alternatively, a wireless communication technology implemented in a wireless device 100, 200 of the present disclosure may include at least any one of a ZigBee, a Bluetooth and a low power wide area network (LPWAN) considering a low-power communication and it is not limited to the above-described name. In an example, a ZigBee technology may generate PAN(personal area networks) related to a small/low-power digital communication based on a variety of standards such as IEEE 802.15.4, etc. and may be referred to as a variety of names.

[Industrial Applicability]

A method proposed by the present disclosure is mainly described based on an example applied to 3GPP LTE/LTE-A, 5G system, but may be applied to various wireless communication systems other than the 3GPP LTE/LTE-A, 5G system.

**Claims**

1. A method for transmitting channel state information (CSI) by a UE in a wireless communication system, the method comprising:

   receiving, from a base station, first configuration information related to CSI reporting and second configuration information related to a CSI resource, wherein the second configuration information includes information on one or more CSI resource sets associated with the first configuration information;
   receiving, from the base station, a CSI-reference signal (CSI-RS) on a plurality of CSI resources of the one or more CSI resource sets based on the second configuration information; and
   transmitting the CSI to the base station based on the CSI-RS and the first configuration information,
   wherein all or part of the plurality of CSI-RS resources are configured as a resource pair for channel measurement, and

wherein, based on a configuration related to a report type of layer indication information, the CSI includes at least one of layer indication information for the resource pair or layer indication information for each of one or more CSI-RS resources configured as the resource pair.

2. The method of claim 1,
wherein the configuration related to the report type of the layer indication information is based on information indicating a report type for at least one of a concatenated channel for the resource pair or a channel for each of one or more CSI-RS resources configured as the resource pair.

3. The method of claim 1,
wherein, based on being configured to report a concatenated channel for the resource pair, the CSI includes layer indication information according to the concatenated channel.

4. The method of claim 3,
wherein the concatenated channel is based on a sum of channels to which a precoding matrix estimated from different CSI-RS resources in the resource pair is applied.

5. The method of claim 3,
wherein the CSI further includes identification information indicating a specific CSI-RS resource among one or more CSI-RS resources configured as the resource pair.

6. The method of claim 1,
wherein, based on the configuration to report a concatenated channel for the resource pair and a channel for each of one or more CSI-RS resources configured as the resource pair, the CSI includes layer indication information based on the concatenated channel and layer indication information based on the channel for each of one or more CSI-RS resources configured as the resource pair.

7. The method of claim 6,
wherein the concatenated channel is based on a sum of channels to which a part of a precoding matrix estimated from different CSI-RS resources in the resource pair is applied, and
wherein the channel for each of one or more CSI-RS resources configured as the resource pair is based on a channel to which the remaining part of the precoding matrix estimated from the different CSI-RS resources in the resource pair is applied.

8. The method of claim 6,
wherein, based on a maximum number of ports for a phase tracking (PT)-RS being configured, whether to report layer indication information based on the concatenated channel is determined according to the maximum number of ports.

9. The method of claim 1,
wherein the first configuration information includes a configuration related to a report type of the layer indication information.

10. The method of claim 9,
wherein the configuration related to the report type of the layer indication information is based on whether co-phase information is included in a report quantity configuration included in the first configuration information.

11. A user equipment (UE) for transmitting channel state information (CSI) in a wireless communication system, the UE comprising:

at least one transceiver for transmitting and receiving a wireless signal; and
at least one processor for controlling the at least one transceiver,
wherein the at least one processor configured to:

receive, from a base station, first configuration information related to CSI reporting and second configuration information related to a CSI resource, wherein the second configuration information includes information on one or more CSI resource sets associated with the first configuration information;

receive, from the base station, a CSI-reference signal (CSI-RS) on a plurality of CSI resources of the one or more CSI resource sets based on the second configuration information; and

transmit the CSI to the base station based on the CSI-RS and the first configuration information,

wherein all or part of the plurality of CSI-RS resources are configured as a resource pair for channel measurement, and

wherein, based on a configuration related to a report type of layer indication information, the CSI includes at least one of layer indication information for the resource pair or layer indication information for each of one or more CSI-RS resources configured as the resource pair.

12. A method for receiving channel state information (CSI) by a base station in a wireless communication system, the method comprising:

transmitting, to a user equipment (UE), first configuration information related to CSI reporting and second configuration information related to a CSI resource, wherein the second configuration information includes information on one or more CSI resource sets associated with the first configuration information;

transmitting, to the UE, a CSI-reference signal (CSI-RS) on a plurality of CSI resources of the one or more CSI resource sets based on the second configuration information; and

receiving the CSI from the UE based on the CSI-RS and the first configuration information,

wherein all or part of the plurality of CSI-RS resources are configured as a resource pair for channel measurement, and

wherein, based on a configuration related to a report type of layer indication information, the CSI includes at least one of layer indication information for the resource pair or layer indication information for each of one or more CSI-RS resources configured as the resource pair.

13. A base station for receiving channel state information (CSI) in a wireless communication system, the base station comprising:

at least one transceiver for transmitting and receiving a wireless signal; and

at least one processor for controlling the at least one transceiver,

wherein the at least one processor configured to:

transmit, to a user equipment (UE), first configuration information related to CSI reporting and second configuration information related to a CSI resource, wherein the second configuration information includes information on one or more CSI resource sets associated with the first configuration information;

transmit, to the UE, a CSI-reference signal (CSI-RS) on a plurality of CSI resources of the one or more CSI resource sets based on the second configuration information; and

receive the CSI from the UE based on the CSI-RS and the first configuration information,

wherein all or part of the plurality of CSI-RS resources are configured as a resource pair for channel measurement, and

wherein, based on a configuration related to a report type of layer indication information, the CSI includes at least one of layer indication information for the resource pair or layer indication information for each of one or more CSI-RS resources configured as the resource pair.

14. A processing apparatus configured to control a user equipment (UE) to transmit channel state information (CSI) in a wireless communication system, the processing apparatus comprising:

at least one processor; and

at least one computer memory operably connected to the at least one processor and storing instructions that, based on being executed by the at least one processor, perform operations comprising:

receiving, from a base station, first configuration information related to CSI reporting and second configuration information related to a CSI resource, wherein the second configuration information includes information on one or more CSI resource sets associated with the first configuration information;

receiving, from the base station, a CSI-reference signal (CSI-RS) on a plurality of CSI resources of the one or more CSI resource sets based on the second configuration information; and

transmitting the CSI to the base station based on the CSI-RS and the first configuration information,

wherein all or part of the plurality of CSI-RS resources are configured as a resource pair for channel measurement, and

wherein, based on a configuration related to a report type of layer indication information, the CSI includes at least one of layer indication information for the resource pair or layer indication information for each of one or more CSI-RS resources configured as the resource pair.

**15.** At least one non-transitory computer-readable medium storing at least one instruction,
wherein the at least one instruction executable by at least one processor controls a device transmitting channel state information (CSI) in a wireless communication system to:

receive, from a base station, first configuration information related to CSI reporting and second configuration information related to a CSI resource, wherein the second configuration information includes information on one or more CSI resource sets associated with the first configuration information;
receive, from the base station, a CSI-reference signal (CSI-RS) on a plurality of CSI resources of the one or more CSI resource sets based on the second configuration information; and
transmit the CSI to the base station based on the CSI-RS and the first configuration information,
wherein all or part of the plurality of CSI-RS resources are configured as a resource pair for channel measurement, and
wherein, based on a configuration related to a report type of layer indication information, the CSI includes at least one of layer indication information for the resource pair or layer indication information for each of one or more CSI-RS resources configured as the resource pair.

FIG.1

## FIG.2

Radio Frame 10ms

Fixed Size

Subframe 1ms

| 0 | 1 | 2 | 3 | 4 | 5 | 6 | 7 | 8 | 9 |

Subframe ={1,2,4} Slots

Slot

| 0 | 1 | 2 | 3 |

Slot={7,14} Symbols

Symbol

| 0 | 1 | 2 | 3 | 4 | 5 | 6 | 7 | 8 | 9 | 10 | 11 | 12 | 13 |

Size depends on subcarrier spacing

Mini-Slot (URLLC)

Mini-Slot={2,4,7} Symbols

# FIG.3

One Subframe

$14 \cdot 2^{\mu}$ OFDM Symbol

$k = N_{RB}^{\mu} N_{SC}^{RB} - 1$

Resource Block

Resource Element
- In a resource grid, $(k, \bar{l})$
- In a resource block, $(k, l)$

$N_{RB}^{\mu} N_{SC}^{RB} - 1$ Subcarrier

$N_{SC}^{RB}$ Subcarrier

$k = 0$

$l = 0$

$l = 14 \cdot 2^{\mu} - 1$

# FIG.4

# FIG.5

Resource grid

A carrier
(up to 3300 subcarriers,i.e.,275 RBs)

A BWP

1 RB=12 subcarrier

1 RE

1 subcarrier

1 Symbol

l=0 ·····

k=0

EP 4 383 584 A1

# FIG.6

INITIAL CELL SEARCH

SYSTEM INFORMATION RECEPTION

RANDOM ACCESS PROCEDURE

GENERAL DL/UL Tx/Rx

PSS/SSS& [DLRS]& PBCH

PDCCH/ PDSCH (BCCH)

PRACH

PDCCH/ PDSCH

PUSCH

PDCCH/ PDSCH

PDCCH/ PDSCH

PUSCH/ PUCCH

S601

S602

S603

S604

S605

S606

S607

S608

· DL/UL ACK/NACK
· UE CQI/PMI RI REPORT
  USING PUSCH AND PUCCH

# FIG.7

EP 4 383 584 A1

TRP 1

TRP 2

Layer group #1
for CW #1

Layer group #2
for CW #1

UE1

(a)

TRP 1

TRP 2

Layer group #1
for CW #1

Layer group #2
for CW #2

UE1

(b)

## FIG.8

NZP-CSI-RS-ResourceSet (for channel measurement)

(a)

Group 1

| | |
|---|---|
| NZP-CSI-RS-ResourceId 0 | |
| NZP-CSI-RS-ResourceId 1 | |
| NZP-CSI-RS-ResourceId 2 | |
| NZP-CSI-RS-ResourceId 3 | |

Pair 1

Pair 2

Group 2

| |
|---|
| NZP-CSI-RS-ResourceId 4 |
| NZP-CSI-RS-ResourceId 5 |
| NZP-CSI-RS-ResourceId 6 |
| NZP-CSI-RS-ResourceId 7 |

NZP-CSI-RS-ResourceSet (for channel measurement)

(b)

Group 1

| |
|---|
| NZP-CSI-RS-ResourceId 0 |
| NZP-CSI-RS-ResourceId 1 |
| NZP-CSI-RS-ResourceId 2 |

Pair 1

Group 2

| |
|---|
| NZP-CSI-RS-ResourceId 4 |
| NZP-CSI-RS-ResourceId 5 |

# FIG.9

Network                                        User Equipment

CSI related
Configuration information                                S910

RS based on
a plurality of CSI-RS resources                          S920

                                                         S930
CSI reporting

FIG.10

```
                    ┌─────────┐
                    │  START  │
                    └────┬────┘
                         │
                         ▼
    ┌──────────────────────────────────────────┐
    │          Receive CSI related             │     S1010
    │        Configuration information         │
    └──────────────────┬───────────────────────┘
                       │
                       ▼
    ┌──────────────────────────────────────────┐
    │            Receive CSI-RS on             │     S1020
    │      a plurality of CSI-RS resources     │
    └──────────────────┬───────────────────────┘
                       │
                       ▼
    ┌──────────────────────────────────────────┐
    │             Transmit CSI                 │     S1030
    │                                          │
    └──────────────────┬───────────────────────┘
                       │
                       ▼
                    ┌─────────┐
                    │   END   │
                    └─────────┘
```

# FIG.11

```
        ┌─────────┐
        │  START  │
        └─────────┘
             │
             ▼
┌──────────────────────────────────┐
│      Transmit CSI related        │        S1110
│    Configuration information     │
└──────────────────────────────────┘
             │
             ▼
┌──────────────────────────────────┐
│        Transmit CSI-RS on        │        S1120
│  a plurality of CSI-RS resources │
└──────────────────────────────────┘
             │
             ▼
┌──────────────────────────────────┐
│                                  │        S1030
│           Receive CSI            │
└──────────────────────────────────┘
             │
             ▼
        ┌─────────┐
        │   END   │
        └─────────┘
```

FIG.12

First Device 100
Processor(s) 102
Memory(s) 104
Transceiver(s) 106
108

Second Device 200
Processor(s) 202
Memory(s) 204
Transceiver(s) 206
208

## INTERNATIONAL SEARCH REPORT

| | International application No. |
|---|---|
| | **PCT/KR2022/011286** |

### A. CLASSIFICATION OF SUBJECT MATTER

**H04B 7/0456**(2017.01)i; **H04B 7/024**(2017.01)i; **H04B 7/06**(2006.01)i; **H04B 17/309**(2015.01)i; **H04L 5/00**(2006.01)i; **H04L 25/02**(2006.01)i

According to International Patent Classification (IPC) or to both national classification and IPC

### B. FIELDS SEARCHED

Minimum documentation searched (classification system followed by classification symbols)

H04B 7/0456(2017.01); H04B 7/06(2006.01); H04L 1/00(2006.01); H04L 5/00(2006.01); H04W 24/10(2009.01); H04W 72/04(2009.01); H04W 72/08(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 채널 상태 정보(channel state information), 자원 쌍(resource pair), 레이어 지시 정보(layer indication information), 합성 채널(concatenated channel), CJT(coherent joint transmission)

### C. DOCUMENTS CONSIDERED TO BE RELEVANT

| Category* | Citation of document, with indication, where appropriate, of the relevant passages | Relevant to claim No. |
|---|---|---|
| Y<br>A | HUAWEI et al. Discussion on CSI Enhancements for Rel-17. R1-2102339, 3GPP TSG RAN WG1 Meeting #104bis-e, E-meeting. 07 April 2021.<br> See sections 1 and 3.1.1-3.2.1; and figure 9. | 1-2,9-15<br>3-8 |
| Y | SPREADTRUM COMMUNICATIONS. Discussion on CSI enhancement for multi-TRP and FR1 FDD reciprocity. R1-2102447, 3GPP TSG RAN WG1 Meeting #104bis-e, E-meeting. 07 April 2021.<br> See sections 2.1.1-2.1.2. | 1-2,9-15 |
| Y | US 2018-0042028 A1 (SAMSUNG ELECTRONICS CO., LTD.) 08 February 2018 (2018-02-08)<br> See paragraphs [0192]-[0193]. | 10 |
| A | WO 2020-144602 A1 (TELEFONAKTIEBOLAGET LM ERICSSON (PUBL)) 16 July 2020 (2020-07-16)<br> See page 48, line 30- page 62, line 24; and figures 15-18. | 1-15 |

☑ Further documents are listed in the continuation of Box C.   ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **22 November 2022** | **24 November 2022** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

International application No.

**PCT/KR2022/011286**

**C.    DOCUMENTS CONSIDERED TO BE RELEVANT**

| Category* | Citation of document, with indication, where appropriate, of the relevant passages | Relevant to claim No. |
|---|---|---|
| A | US 2021-0194558 A1 (QUALCOMM INCORPORATED) 24 June 2021 (2021-06-24)<br>See paragraphs [0086]-[0141]; and figures 5-7. | 1-15 |

Form PCT/ISA/210 (second sheet) (July 2022)

**INTERNATIONAL SEARCH REPORT**
**Information on patent family members**

International application No.

**PCT/KR2022/011286**

| Patent document cited in search report | | | Publication date (day/month/year) | Patent family member(s) | | | Publication date (day/month/year) |
|---|---|---|---|---|---|---|---|
| US | 2018-0042028 | A1 | 08 February 2018 | EP | 3494649 | A1 | 12 June 2019 |
| | | | | KR | 10-2019-0026964 | A | 13 March 2019 |
| | | | | KR | 10-2348750 | B1 | 07 January 2022 |
| | | | | US | 10448408 | B2 | 15 October 2019 |
| | | | | WO | 2018-026241 | A1 | 08 February 2018 |
| WO | 2020-144602 | A1 | 16 July 2020 | CN | 113574815 | A | 29 October 2021 |
| | | | | CO | 2021010364 | A2 | 19 August 2021 |
| | | | | EP | 3909159 | A1 | 17 November 2021 |
| | | | | US | 2022-0094399 | A1 | 24 March 2022 |
| US | 2021-0194558 | A1 | 24 June 2021 | WO | 2021-127551 | A1 | 24 June 2021 |

Form PCT/ISA/210 (patent family annex) (July 2022)